(19) Europäisches Patentamt
European Patent Office
Office européen des brevets

(11) EP 1 134 999 A2

(12) EUROPEAN PATENT APPLICATION

(43) Date of publication:
19.09.2001 Bulletin 2001/38

(51) Int Cl.[7]: H04Q 11/00

(21) Application number: 01400500.3

(22) Date of filing: 27.02.2001

(84) Designated Contracting States:
AT BE CH CY DE DK ES FI FR GB GR IE IT LI LU MC NL PT SE TR
Designated Extension States:
AL LT LV MK RO SI

(30) Priority: 28.02.2000 JP 2000052461

(71) Applicant: Nippon Telegraph and Telephone Corporation
Tokyo (JP)

(72) Inventors:
- Takada, Atsushi, c/o NTT Intellectual Musashino-shi, Tokyo 180-8585 (JP)
- Park, Jin Hun, c/o NTT Intellectual Musashino-shi, Tokyo 180-8585 (JP)
- Imajuku, Wataru, c/o NTT Intellectual Musashino-shi, Tokyo 180-8585 (JP)
- Yamabayashi, Yoshiaki, c/o NTT Intellectual Musashino-shi, Tokyo 180-8585 (JP)

(74) Representative: Audier, Philippe André et al
c/o Société de Protection des Inventions,
3, rue du Docteur Lancereaux
75008 Paris (FR)

# (54) Ultra-highspeed packet transfer ring network

(57) In the present ultra-highspeed packet transfer ring network, an add/drop multiplex type node apparatus adds an optical packet to the optical fiber transmission path by preparing a label signal containing information on an address of a destination node apparatus or a routing to the destination node apparatus, and outputs time-sequenced signals to the optical fiber transmission path by multiplexing the optical packet and the label signal by means of wavelength or polarization multiplexing. The add/drop multiplex type node apparatus also receives a label signal by separating and extracting the label signal from the optical fiber transmission path, and determines whether to drop an optical packet corresponding to the label signal to its own node apparatus or to pass the optical packet through with reference to an address or routing information contained in the label signal, and operates an optical switch accordingly. Also, in this ultra-highspeed packet transfer ring network, each node constantly monitors label signals so as to detect any fault developing in the transmission path and to divert the optical packets around the fault. Also, the ultra-highspeed packet transfer ring network enables optical packet compression using a simple circuit by modulating the optical pulses separated by an optical divider with respective data, and multiplexing the modulated pulses again. Also, highspeed optical packet decompression is achieved using a simple circuitry by converting the input optical packets in an OTDM/WDM conversion circuit to different wavelengths and inputting these waves in a wavelength-dependent delay circuit.

FIG. 1

1-4
1-3
1-2
OPTICAL LABEL
(WAVELENGTH $\lambda_L$)
OPTICAL PACKET
(WAVELENGTH $\lambda_P$)
1-1:OPTICAL ADD/DROP MULTIPLEX
TYPE NODE APPARATUS
2:OPTICAL FIBER
TRANSMISSION PATH
3-2:COM TERMINAL
3-1:COM TERMINAL

EP 1 134 999 A2

**Description**

BACKGROUND OF THE INVENTION

Field of the Invention

This application is based on a patent application No.2000-52461 filed in Japan, the content of which is incorporated herein by reference.

The present invention relates to an optical add/drop multiplex type node apparatus for packets to be added to or dropped from the optical fiber transmission path in optical packet units, a method of operating the optical add/drop multiplex type node apparatus and an ultra-highspeed packet transfer ring network formed by connecting the optical add/drop multiplex type node apparatuses with optical fibers in a ring network., The present invention relates also: to a communication apparatus to connect the internal elements in a ring by adding/dropping optical packets in optical packet units; to methods for protecting packet-based label switching; and to circuits for serial compressing and decompressing of optical packets.

Description of the Related Art

At the present time, communication of data among the apparatuses such as computers (referred to as communication terminals hereinbelow) for communicating in packets is carried out by converting the data to packets, or so-called IP datagrams, (referred to as IP packets below). Also, because communication is carried out between any two com(munication) terminals connected to the network, a plurality of packet transfer apparatuses, or so-called routers, are provided for the network.

In a router, an output path of an input IP packet is selected according to an IP address shown by a logical number, associated with a transceiver terminal, written in a portion of the incoming packet called an IP header. In a large-scale network such as the Internet, packets sent from a com terminal cannot be delivered to a destination terminal without being switched through a large number of routers.

Therefore, according to normal methods of software-based packet transfer processing, packets are temporarily stored in memory before transfer processing so that delays due to software processing has been unavoidable. Such delays are cumulative as the packets are transferred through many nodes in the network resulting in overall delay in delivering the packets. Also, even in a network based on dedicated ICs to improve the speed of IP packets processing, the following problem is anticipated.

In the near future, in a large-scale network such as the Internet, it is expected that the network throughput must be in a range of several Tbps (tetra bits per second) to several hundred Tbps. To realize a packet handling speed of such a magnitude, high-capacity links and high-throughput routers for determining the forwarding paths to other links will be required. In recent years, because of introduction of such technologies as wavelength-division or optical time-division multiplexing, it has become possible to increase the inter-link capacity to a speed level in excess of several hundred Gbps (gega bits per second). In the meantime, for the routers to produce such data speeds, each I/O path in a router must be able to process data at a speed of several hundred Gbps. Even those highspeed routers having dedicated ICs to increase the productivity cannot provide such a throughput, if conventional configurations are retained.

One proposed solution to this problem is to arrange a large number of ICs in parallel so that a high throughput can be produced even though individual processing speeds of ICs are slow, such a scheme presents problems of increasing the size of the facility and complexity of the interconnection of ICs.

There has also been a proposal to adopt an optical path network in which different wavelengths are assigned for a path connecting one node to another node so that packets addressed to the same node address will be transmitted using a common wavelength. In this case, communication between neighboring nodes is performed by WDM (wavelength division multiplexing) and within each node, only a specific wavelength is demultiplexed using wavelength dispersion elements such as AWG (arrayed wave guide), and packets are extracted from the demultiplexed wavelength and are processed by the router; however, because other wavelengths are cut-through to other nodes in the optical mode, the load on the router section of each node is significantly reduced. Presently, this approach is being evaluated in terms of ring topology (based on a WDM/OADM ring network).

However, because the above approach to the optical path network is based on assigning a wavelength to a path and path selection is carried out in wavelength units in a quasi steady-state manner, when the traffic volume of real packets through a path is low relative to the capacity of the path, throughput of the overall network cannot be raised. Here, in order to raise the throughput of overall network, although it is possible to consider an approach of changing the path capacity dynamically, such that a high capacity path is dynamically assigned to a high traffic path while a low capacity path is assigned to a low traffic path, to put such a method into practice, it is necessary to provide a wavelength selection device to monitor the traffic volume constantly to enable to alter wavelength assignment to various paths as well as an operational network and softwares to operate the network, resulting in complex operational requirements for the network.

SUMMARY OF THE INVENTION

Therefore, an object of the present invention is to provide an ultra-highspeed optical packet transfer ring network that enables to transfer packets at low delay, low delay jitter, and provides high capacity and high scalability, and facilitates network operation, and an optical add/drop multiplex type node apparatus for use in the ring network, and a method of operating the optical add/drop multiplex type node apparatus.

According to the present invention, the object is achieved in the ultra-highspeed optical packet transfer ring network by connecting optical add/drop multiplex type node apparatuses in a ring network for optical packets to be added to, dropped from or passed through said ring network by means of an optical fiber transmission path, wherein a packet transfer control section is provided in each optical add/drop multiplex type node apparatus to manage a flow of incoming packets arriving through the optical fiber transmission path so that an optical packet not addressed to itself is allowed to pass through as an optical packet, and an optical packet addressed to its own node apparatus is dropped for further processing.

Another object of the present invention is to realize, in an ultra-highspeed optical packet transfer ring network, packet-based switching that offers high throughput for burst traffic and offers highspeed switching and reliable protection for transmission failure equal to or higher than SDH by constantly monitoring the transmission quality.

According to the present invention, the object is achieved in a label switching network that transfers packets between nodes according to address information contained in label information of each packet by attaching a path code for detecting or correcting errors in the transmission system to a frame of the label information so that the label information can be monitored by the nodes to monitor transmission quality of the transmission system.

Also, an object of the present invention is to provide a circuit that can compress or decompress optical packets at high precision of several hundred Gbps, for example, to enable to operate in an ultra-highspeed optical packet transfer ring network. According to the present invention, the object is achieved in an optical packet compression circuit comprised by: an optical pulse generation section for generating optical pulses at $\Delta T$ intervals; an optical divider for separating optical pulses output from the optical pulse generation section into N pieces of signal lines; a buffering circuit for temporarily storing serially input data and outputting N parallel trains, where N is a natural number; N pieces of modulators, one modulator for each of N signal lines, for modulating optical signals output from the optical divider individually according to N pieces of data output from the buffering circuit; an optical delay line provided in a back stage of the modulator in each signal line for delaying output signals of the modulator by an amount equal to a whole multiple of $\Delta t$; and an optical coupler for outputting modulated optical pulses so that each optical pulse is shifted by an interval $\Delta t$ by means of the optical delay line.

Also, according to the present invention, the object is achieved, for example, in an optical decompression circuit comprised by: an OTDM/WDM conversion circuit for converting pulses in continually input optical pulses located at different time positions into different wavelengths; and a dispersive medium for receiving signals from the OTDM/WDM conversion circuit, and generating different values of time delay according to signal wavelengths.

The reference numerals appended in the claims do not limit the interpretation of the claims.

## BRIEF DESCRIPTION OF THE DRAWINGS

Figure 1 is a schematic diagram of the configuration of an embodiment of the ultra-highspeed packet transfer ring network of the present invention.

Figure 2 is a block diagram of an embodiment of the optical add/drop multiplex type node apparatus of the present invention.

Figure 3 is a block diagram of the detailed configuration of the optical add/drop multiplex type node apparatus shown in Figure 2.

Figure 4 is a timing chart to explain the operation of various sections of the optical add/drop multiplex type node apparatus shown in Figure 3.

Figures 5A, 5B are diagrams to show the state of 2x2 optical switch shown in Figure 3 and different routings.

Figure 6 is a table summarizing the transition of states of the 2x2 optical switch shown in Figure 3.

Figure 7 is a diagram to explain the concept of compression/decompression of packets in the optical node apparatus shown in Figure 3.

Figure 8 is a timing chart for add-packet flow control in the optical node apparatus shown in Figure 3.

Figure 9 is a table showing an example of design numbers for the ultra-highspeed optical packet transfer ring network of the present invention.

Figure 10 is a diagram to show an example of the configuration of the packet compression circuit shown in Figure 3.

Figure 11 is an example of the timing chart for sending the dedicated label to provide a band guarantee by the master node apparatus.

Figure 12 is a graph showing a relationship between the burst factor and accommodating node capacity in designing the ultra-highspeed packet transfer ring network.

Figure 13 is a graph showing queuing delay levels represented by a relation between the utilization and average packet waiting time.

Figure 14 is a graph showing queuing delay jitter represented by a relation between the utilization and packet dispersion.

Figure 15 is a flowchart showing the steps in protecting network operation in a 2-fiber 1:1 uni-directional network.

Figures 16A, 16B and 16C are schematic diagrams showing label switching paths from node 6 to other nodes for the cases of normal operation, fiber cut and ring cut, respectively, in a 2-fiber 1:1 uni-directional network.

Figure 17 is a block diagram of an example of the configuration of a 2-fiber 1:1 uni-directional network.

Figure 18 is a flowchart showing the protection steps in a 2-fiber 1+1 uni-directional network.

Figures 19A, 19B and 19 C are schematic diagrams showing label switching paths from node 6 to other nodes for the cases of normal operation, fiber cut and ring cut, respectively, in a 2-fiber 1+1 uni-directional network, when the transfer direction is opposite in the working path and the protection path.

Figures 20A, 20B are schematic diagrams showing label switching paths from node 6 to other node for the cases of normal operation and fiber cut, respectively, in a 2-fiber 1+1 uni-directional network, when the transfer direction is the same in the working path and the protection path.

Figure 21 is a block diagram of an example of the node configuration of a 2-fiber 1+1 uni-directional network, when the transfer direction in the working path is opposite to that in the protection path.

Figure 22 is a flowchart for the protection steps in a packet switched 2-fiber 1+1 uni-directional network.

Figure 23 is a block diagram of an example of the node configuration of a packet switched 2-fiber 1+1 uni-directional network, when the transfer direction is opposite in the working path and the protection path.

Figure 24 is a flowchart for the protection steps in a packet switching 4-fiber 1:1 bi-directional network.

Figures 25A, 25B and 25C are schematic diagrams showing label switching paths from node 6 to other node for normal operation, fiber cut and ring cut, respectively, in a 4-fiber 1:1 bi-directional network.

Figure 26 is a block diagram of an example of the node configuration of a 4-fiber 1:1 bi-directional network.

Figure 27 is a flowchart for the protection steps in a 4-fiber 1+1 bi-directional network.

Figures 28A, 28B and 28C are schematic diagrams showing label switching path from node 6 to other node for normal operation, fiber cut and ring cut, respectively, in a 4-fiber 1+1 bi-directional network, when the transfer direction is the same in the working path and the protection path.

Figures 29A, 29B and 29C are schematic diagrams showing label switching path from node 6 to other node for normal operation, fiber cut and ring cut, respectively, in a 4-fiber 1+1 bi-directional network, when the transfer direction is opposite in the working path and the protection path.

Figure 30 is a block diagram of an example of the node configuration of a 4-fiber 1+1 bi-directional network, when the transfer direction in the working path is opposite to that in the protection path.

Figure 31 is a flowchart for the protection steps in a packet switching 4-fiber 1+1 bi-directional network.

Figure 32 is a block diagram of an example of the node configuration of a packet switched 4-fiber 1+1 bi-directional network.

Figure 33 is a flowchart for the process of identifying faulty optical switch locations.

Figure 34 is a block diagram of an example of the optical packet compression circuit according to the conventional technology.

Figure 35 is a block diagram of another example of the optical packet compression circuit according to the conventional technology.

Figure 36 is a block diagram of still another example of the optical packet compression circuit according to the conventional technology.

Figure 37 is a block diagram of an example of the optical packet decompression circuit according to the conventional technology.

Figure 38 is a block diagram of another example of the optical packet decompression circuit according to the conventional technology.

Figure 39 is a block diagram of the configuration of the optical packet compression circuit according to an embodiment of the present invention.

Figure 40 is a timing chart for the pulse signals in the optical packet compression circuit shown in Figure 39.

Figure 41 is a block diagram of a configuration of the optical packet decompression circuit according to an embodiment of the present invention.

Figure 42 is a block diagram to show a detailed configuration of the optical serial/parallel conversion circuit in the optical packet decompression circuit shown in Figure 41.

Figure 43 and 44 are timing charts for the pulse signals in the optical packet decompression circuit shown in Figure 41.

Figure 45 is a block diagram of the configuration of the optical packet decompression circuit according to another embodiment of the present invention.

Figure 46 is a block diagram to show a detailed configuration of the dispersion medium in the optical packet decompression circuit shown in Figure 45.

Figure 47 is a timing chart for the pulse signals in the optical packet decompression circuit shown in Figure 45.

## DESCRIPTION OF THE PREFERRED EMBODIMENTS

The following embodiments do not restrict the interpretation of the claims relating to the present invention, and the combination of all the features explained in the embodiments is not always being indispensable means of solving the problem.

In the following, preferred embodiments will be explained with reference to the drawings.

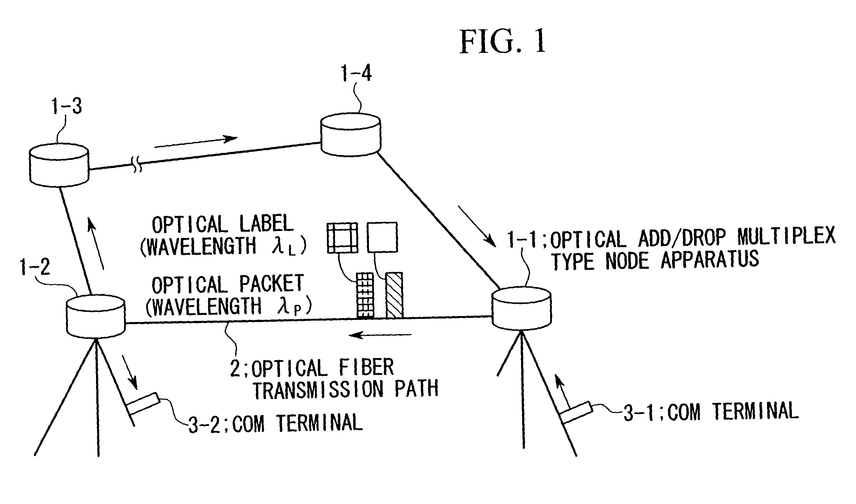

Figure 1 shows a configuration in an embodiment of the ultra-highspeed optical packet transfer ring network of the present invention.

The ultra-highspeed optical packet transfer network is comprised by connecting optical add/drop multiplex type node apparatuses 1-1, 1-2, 1-3, 1-4 through an optical fiber transmission path 2 in a ring network, and the optical add/drop multiplex type node apparatuses 1-1, 1-2 are connected to com terminals 3-1, 3-2 and others.

An outline of the operation of the network will be described next. For the purpose of transferring packets, the com terminal 3-1, for example, is connected to an optical add/drop multiplex type node apparatuses 1-1 (may be referred to as optical node apparatus in some cases) that constitutes the ring network. The optical add/drop multiplex type node apparatus 1-1 reads the header information in the packet received from a com terminal 3-2 and deduces the address or routing information on the optical add/drop multiplex type node apparatusl-2 connected to the destination com terminal 3-2.

The optical node apparatus 1-1 prepares a label containing information on the destination node apparatus 1-2 of the packet in the form of PCM signals (pulse code modulated signals). The packet and the label are respectively converted to optical signals by E-O (electric-optical) converters, and are forwarded to a common transmission path 2 by means of polarization multiplexing or wavelength multiplexing.

In each of the optical add/drop multiplex type node apparatuses 1-1~1-4 through which the packet and the label signal are transmitted, a label signal is obtained by means of polarization demultiplexing or wavelength demultiplexing and converting to an electrical signal, and it is determined whether or not the corresponding packet is addressed to its own node apparatus by means of electronic circuit, and if the packet is addressed to its own node apparatus, an optical switch for inputting the optical packet is operated so as to drop the packet, and if the packet is not addressed to its own node apparatus, the optical switch is operated so as to pass the packet through as optical signal. Even when the packet is to be passed through, a corresponding optical label is reproduced and is multiplexed with the pass-packet for transmission. That is, routing control is performed by electrical circuit while transfer control of optical signal is performed by optical switches so as to enable packet transfer control to be performed in the form of ultra-highspeed optical signals.

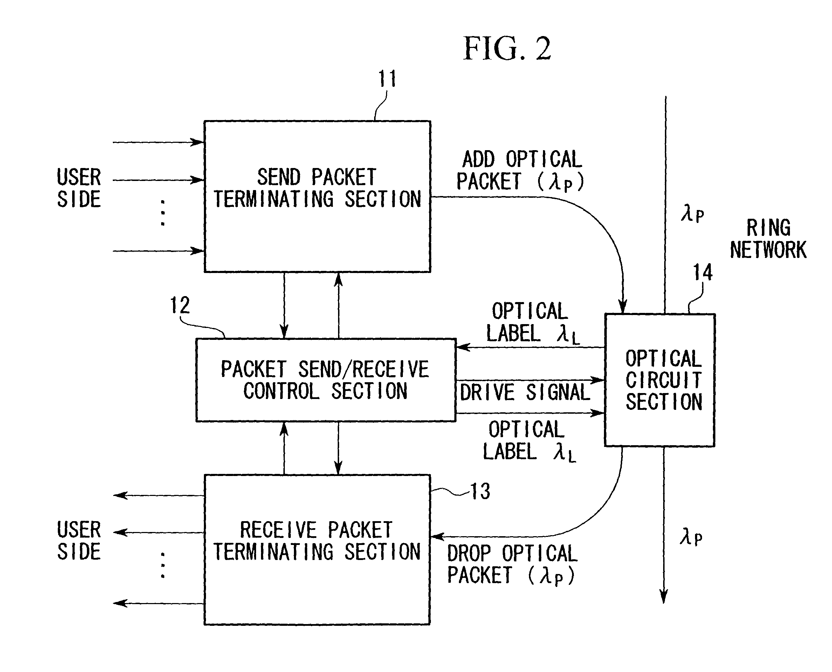

Figure 2 shows a block diagram of an embodiment of the optical add/drop multiplex type node apparatus. The optical add/drop multiplex type node apparatus in this example corresponds to the optical add/drop multiplex type node apparatuses (1-1~1-4) shown in Figure 1, and has a send packet terminating section 11, a packet send/receive control section 12, a receive packet terminating section 13 and an optical circuit section 14.

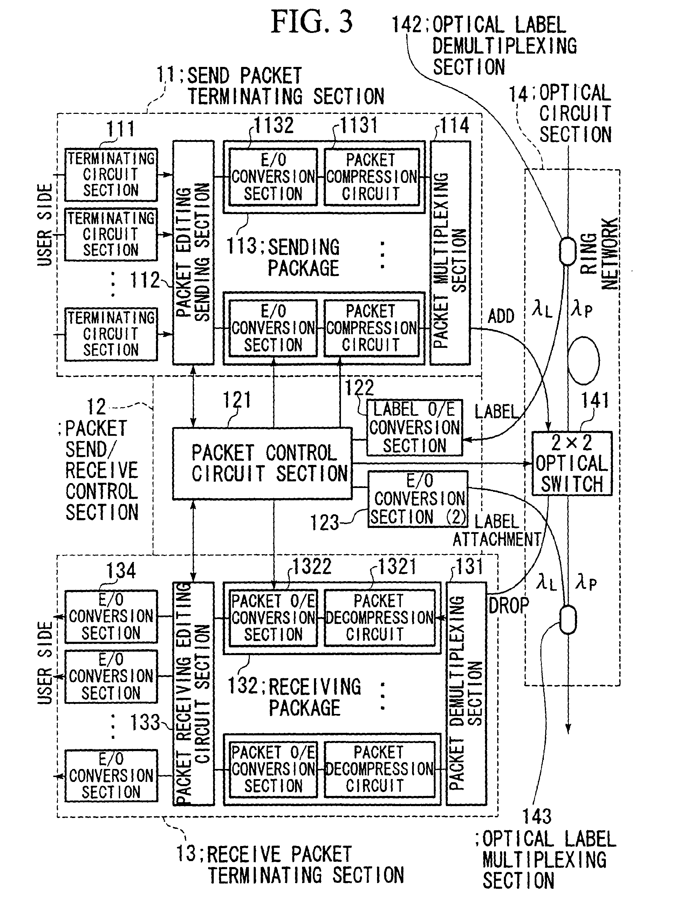

Figure 3 shows block diagram of an example of the detailed configuration of the optical add/drop multiplex type node apparatus shown in Figure 2. The send packet terminating section 11 is comprised by a plurality of terminating circuit sections 111; a packet editing sending circuit section 112; and a plurality of sending packages 113, each of which is comprised by an E/O conversion section 1132 and a packet compression circuit 1131; and a packet multiplexing section 114. The packet send/receive control section 12 is comprised by an label O/E conversion section 122, an E/O conversion section (2) 123, and a packet control circuit section 121. The receive packet terminating section 13 is comprised by a packet demultiplexing section 131; a plurality of receiving packages 132, each of which is comprised by a packet decompression circuit 1321 and a packet O/E conversion section 1322; a packet editing receiving circuit section 133; an E/O conversion section 134. The optical circuit section 14 is provided with a 2x2 optical switch 141, an optical label demultiplexing section 142 and an optical label multiplexing section 143.

Next, the network operation will be explained in detail with emphasis on the configuration of the optical add/drop multiplex type node apparatus. It is anticipated that packets from other com terminals connected to the present network will be connected to the packet terminating circuit section 111 of the send packet terminating section 11 through each user network interface such as Ethernet and SDH (synchronous digital hierarchy) and the like. Therefore, this circuit is provided so as to terminate the format and forward to the next stage packet editing sending circuit section 112 using the same format, so that the number of terminating sections 11 matches the number of com terminals connected to the relevant optical node apparatus.

The packet editing sending circuit section 112 provides temporary buffering for the data section of the packet and sender/receiver addresses and service information (priority, allowable delay and others). When a group of packets are addressed to a common destination optical add/drop multiplex type node and their service levels are the same, the packet editing sending circuit section 112 can provide editing to packets sent from other terminating circuit sections 111 by grouping them in a new packet.

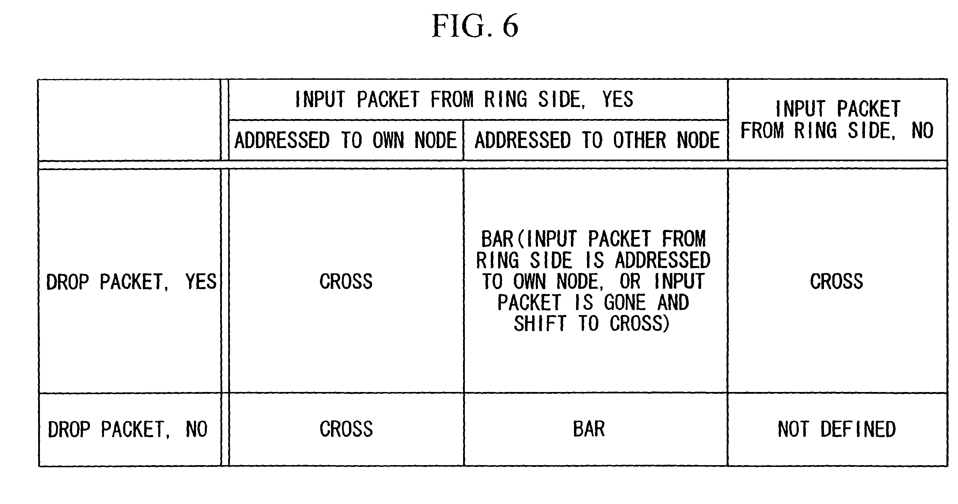

Also, the packet editing sending circuit section 112 has a table that indicates which optical node apparatus is connected to the destination com terminal of the input packet, and, by referencing the table, prepares address information of the optical node apparatus that is connected to the destination com terminal as a label for each packet to ensure that labels correspond to the packets. Then, the label is output to the packet send/receive control section 12. The packets are output from the packet editing sending circuit section 112 to the E/O conversion section 1132 of the sending package 113, in response to optical packet send command signals issued from the packet send/receive control section 12. The packet send command signal is output when there is no input packet from the optical fiber path side, or when the packets are addressed to its own node (refer to Figure 6, which will be explained later).

The packet signal exiting from the packet editing sending circuit section 112 is converted to an optical signal in the E/O conversion section 1132. It is preferable that the wavelength of the optical packet is close to one specific wavelength (packet wavelength) associated with one subject ring network. This is because, if the wavelength is different for each optical packet to be sent out from the respective optical add/drop multiplex type node apparatuses, wavelength dispersion in the optical fiber transmission path causes walk-off of the packets (variations in the relative propagation delay times of packets) resulting in chronological overlapping of adjacent packets to make packet separation impossible. Also, the packet send/receive control section 12 outputs label signals corresponding to the packets to the E/O conversion section (2) 123, which converts the label signals to optical signals having respective label wavelengths.

The optical packet signal is added to the optical fiber on the ring path side by the 2x2 optical switch 141 in the optical circuit 14, and the label signal corresponding to this optical packet is polarization multiplexed or wavelength multiplexed with a specific time difference to the optical packet propagating in the optical fiber on the ring path side. The sending time difference between the optical packet and the optical label is determined so that the difference in the arrival times of the optical packet and the optical label in the next node apparatus will be a certain specific value.

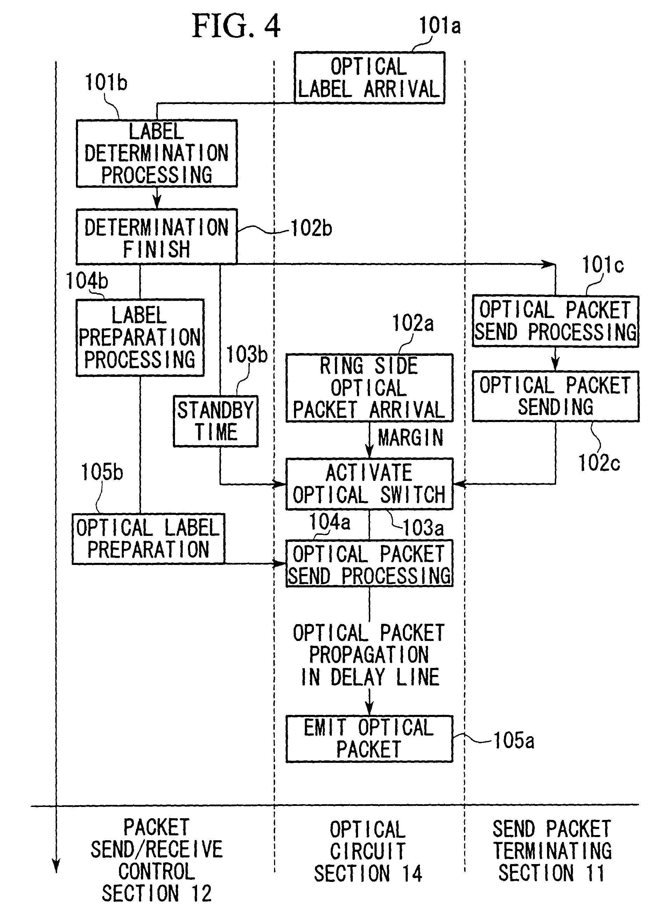

Figure 4 shows a timechart for the operation of the various functional sections described above. As shown in this diagram, the arriving time differential (the optical label arriving earlier) between the optical packet and the optical label is determined so that it is longer than the processing time required for label discrimination process 101b in the packet send/receive control section 12 and the time for send processing 101c of the optical packet in the send packet terminating section 11. Particularly, when the optical packet and the optical label are wavelength multiplexed, the sending time differential is determined by considering the group velocity dispersion in the optical fiber transmission path 2, because the respective wavelengths are different. The processing steps for the timechart shown in Figure 4 will be explained later.

In each of the optical add/drop multiplex type node apparatuses 1-1～1-4 that constitute the ring network, an optical packet processed by wavelength demultiplexing or polarization demultiplexing by the optical label demultiplexing section 142 in the optical circuit section 14 is converted to an electrical signal in the label O/E conversion section 122 of the packet send/receive control circuit section 12, and the packet control circuit section 121 determines whether or not the packet is addressed to its own node apparatus, and a driving signal is sent to the 2x2 optical switch 141 in accordance with the result of the determination, and an optical packet send command is sent to the send packet terminating section 11.

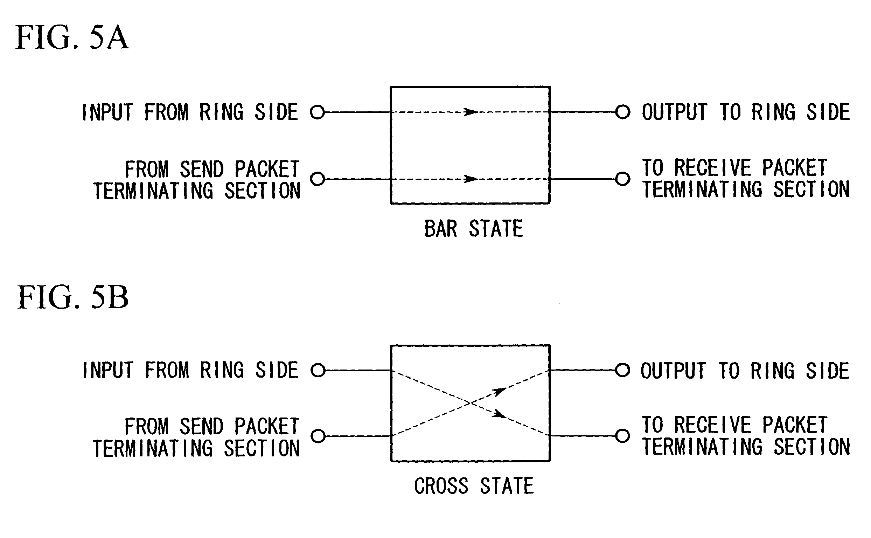

Figures 5A, 5B show the two states of the 2x2 optical switch 141 that operates depending on whether there are input optical packets from the ring side and whether there are add-packet from destination and its node apparatus.

These diagrams show the two coupling states between the I/O ports of the 2x2 optical switch 141. When the optical packet input from the ring side is addressed to its own node apparatus, a drive signal is sent to the relevant 2x2 optical switch 141 to shift its state to a cross state as shown in Figure 5B, and the arriving optical packet is dropped to send it to the packet O/E conversion section 1322 of the receiving package 132 in the receive packet terminating section 13. If there is an add-packet, the packet from the ring side is dropped while the add-packet is added to the ring side.

When the input optical packet is not addressed to its own node apparatus, a drive signal is sent to the 2x2 optical switch 141 so as to shift its state to the bar state as shown in Figure 5A, and the relevant optical packet is passed on without any change to the next node apparatus. As described earlier, the terminated label signal is again converted to an optical label and are combined with the corresponding optical packet in the optical label multiplexing section 143 by polarization multiplexing or wavelength multiplexing, at suitable time intervals, so as to arrive at the next node apparatus within a certain time limit. Table 6 shows a summary of the shifting states of the 2x2 optical switch 141.

At this point, operational timing of the send packet terminating section 11, packet send/receive control section 12 and optical circuit section 14 will be explained with reference to the timing chart shown in Figure 3. When an optical label signal arrives in the optical circuit section 14 (step 101a), the packet send/receive control section 12 determines an address and other information on the optical label signal (step 101b), and after finishing the determination process (step 102b), if there is no input packet from the ring-side or if the input packet is addressed to its own node apparatus, an optical packet send command is output to the send packet terminating section 11 and, when a standby time is elapsed (step 103b), outputs a drive signal for the 2x2 optical switch 141 to the optical circuit section 14. On the other hand, if there is an input packet from the ring-side or the input packet is not addressed to its own node apparatus, the packet send/receive control section 12 re-processes the arrived label to generate a new optical label (steps 104b, 105b).

Accordingly, the send packet terminating section 11 performs optical packet sending processing (step 101c) to send the optical packet (step 102c). When the optical packet arrives from the ring side (step 102a), the 2x2 optical switch 141 in the optical circuit 14 are switched over (step 103a), as explained in Figures 5A, 5B. After which, in step 104a, the optical label regenerated in the send packet terminating section 11 is output, and an optical packet (transfer optical packet) time corrected for the propagation delay is added into the ring transmission path (step 105a).

In the packet editing receiving circuit section 133 of the receive packet terminating section 13, the packet signal sent from the packet O/E conversion section 1322 of the receiving package 132 is input therein, and is re-edited to the format that the packet had before it was edited in the previous package editing sending circuit section. When re-editing, address information on the destination com terminal such as IP address of the original packet are read, and the packet re-edited according to such information is output to the relevant output port.

In the network using the optical add/drop multiplex type node apparatus 1 described above, if the traffic at a certain upstream node apparatus is high and the traffic load on the ring side is near 1, the add probability to the ring transmission path is reduced. If adding is impossible, the packets are stored in the memory of the send packet terminating section 11 until an add-permitting slot arrives. However, in such a case, because the average arrival rate of a vacant slot is unfavorable and statistical, transfer delay and transfer delay variations are increased, and in the worst case, packet can be corrupted when the memory capacity is exceeded.

For this reason, in this example, at least one optical node apparatus of the optical add/drop multiplex type node apparatuses in the ring network is controlled in such a way that an authorizing label is issued at given intervals that permits packets to be added only to the address of a specified node apparatus in the ring network. The slots for the packets corresponding to such authorizing labels are left vacant. Those optical add/drop multiplex type node apparatuses other than the specified optical node apparatus within the ring network read the label and determine that packet adding is not permitted according to the authorizing label so that these slots are forwarded in the vacant state to the specified optical node apparatus.

That is, the specified optical node apparatus receives vacant slots at the given intervals so that a packet sending rate is guaranteed at a minimum bandwidth governed by arriving vacant slots. If the occupancy rate of the dedicated packet from an optical node apparatus relative to the entire packet round is assumed to be 1 % and the packet time duration is 80 ns, then, the dedicated packet arrival rate of the specified optical node apparatus would be 125 kHz. If the number of bits contained in one packet is 1500 bytes (12000 bits), 1.5 Gbit/s bandwidth can be guaranteed for the specific optical node apparatus.

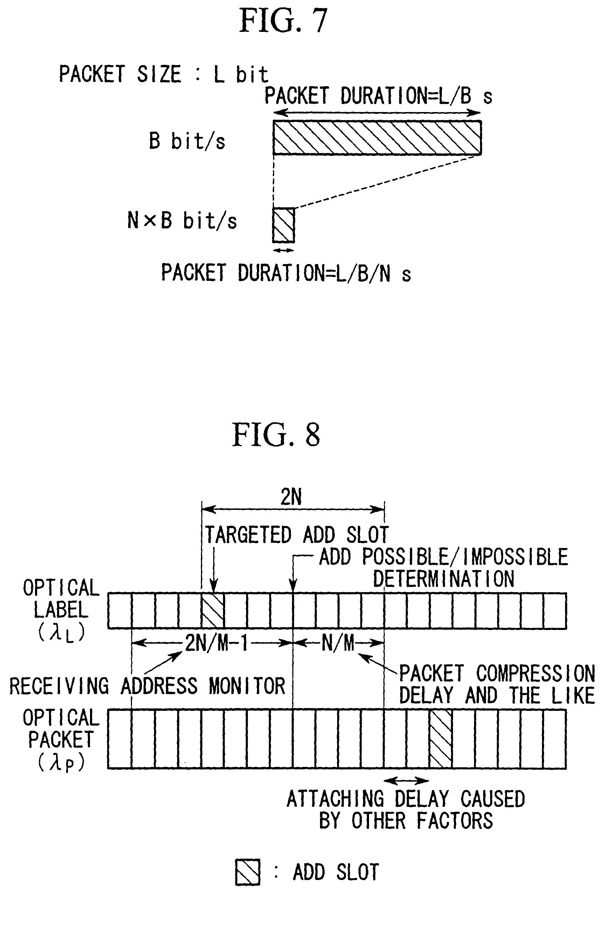

In this example, network throughput is increased by a packet compression circuits 1131 and packet decompression circuits 1321. Figure 7 shows a conceptual diagram for the packet compression/decompression approach. Even if the packet size is the same (same number of bits contained in a packet), by narrowing the interval of bits speed, the packet duration is decreased so that it is possible to transfer a higher number of packets into the ring transmission path in a given time interval to enable to increase the network throughput. Because the packet compression and decompression processes are carried out in the optical signal region, there is no need for altering the structure and capabilities of the packet editing sending circuit section 112 and packet receiving editing circuit section 133.

During the packet adding intervals of the optical add/drop multiplex type node apparatus using the packet compression/decompression circuits 1131, 1321, the flow control method is used. If the compression ratio is designed by N and the number of packet O/E conversion sections 1322 is M, during packet decompression processing in the packet decompression circuit 1321, a decompression interval of N/M slots is necessary, in principle. If a next optical packet addressed to that optical node apparatus arrives during this decompression processing, packet interference can occur in the receive packet terminating section 13 to prevent packet receiving. To avoid such a problem, when each optical node apparatus is attempting to add a packet, a protocol must be established such that packet adding is permitted only after confirming that the transmission link does not include packets addressed to the same address within the vicinity of the time slots targeted for the N/M slots interval (including the packet to be added). Figure 8 shows a timing chart for the optical label and optical packet to permit this approach.

In Figure 8, "attaching delay caused by other factors" refer to the required time differential between the label and packet even when the flow control protocol is not being used. All the optical add/drop multiplex type node apparatuses adjust the packet control circuit section 121 so that the label sending timing is hastened by an amount equal to (N/M-1) of the packet slot interval, compared to the case of not using the packet compression/decompression circuits 1131, 1321. The packet-adding node apparatus monitors packet slots that are ahead of the targeted add slot by more than N/M on the time scale.

If a packet having the same address as the address of the node apparatus for the intended add-packet exists in front or back of the targeted add slot of the add-packet, packet adding is stopped, and if there are no packets having the same address as the address of the intended add-packet, packet adding is carried out. By adopting this protocol, no matter what packet trains in the ring path are extracted, there will be no contiguous N/M packet trains containing more than two packets having the same destination address.

In this example, the optical add/drop multiplex type node apparatus sends out labels by ensuring first that the labels are bit-synchronized. In a packet transfer network in which bit trains of the packets are asynchronous, it is difficult to extract clock signals having better than $10^{-7}$ frequency precision from received packets. In application softwares for distributing image data such as movies in real-time over a long period, it is necessary that the image encoding clock at the sending terminal is matched to the decoding clock with high precision at the receiving terminal.

If the decoding clock at the receiving terminal is higher than the encoding clock at the sending terminal, data are missed at the receiving terminal, and if the decoding clock at the receiving terminal is lower than the encoding clock at the sending terminal, buffer memory at the receiving terminal overflows and the data for the latter portion of the image are destroyed. For example, if high precision moving image data are transmitted for two hours at a clock frequency of 600 MHz between send/receive terminals whose clock frequency differential is $10^{-5}$, the total discrepancy generated at the end of the show would be as much as 4.3 Mbits. By establishing synchronization of labels, it becomes possible that all the optical node apparatuses within the network can share a common clock frequency of higher than $10^{-9}$ precision, so that it enables to transfer real-time applications such as the one described above. A specific example will be described below.

At least one optical node apparatus of the optical add/drop multiplex type node apparatuses contained in a ring transmission path will be designated as the master node apparatus for supplying a label clock. Each optical node apparatus separates an optical packet from a polarization or wavelength multiplexed optical label and terminates electrically. That is, each optical node apparatus performs the tasks of label clock extraction and label bit regeneration to discriminate the contents. Then, bits are regenerated according to the extracted clock for E/O conversion to produce an optical label, which is sent out to a next node apparatus, by multiplexing with an optical packet using polarization or wavelength multiplexing. That is, each optical node apparatus is able to share a common clock of the master node apparatus by extracting the clock in the received label . In doing so, it is permissible to facilitate label identification by frame synchronization of labels or by insertion of suitable vacant bits between the labels so as to adjust label outgoing rate. Of course, synchronization is established at the bit-level.

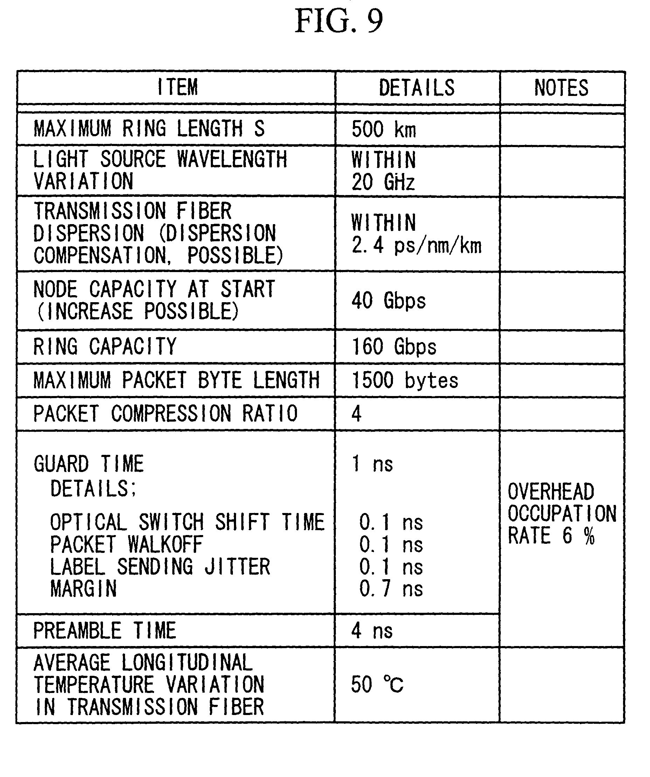

Figure 9 shows a table of design parameters of an ultra-highspeed optical packet transfer ring network. The length of the ring is chosen to be 500 km. Optical fibers used in the ring transmission path are zero-dispersion wavelength shift fibers having a fiber dispersion rate of less than 2.4 ps/nm/km at 1.55 μm, and the optical frequency deviation (wavelength deviation) of the packet-light source in each optical add/drop multiplex type node apparatus is less than 20 GHz. Under these conditions, the walk-off time after one complete round of the ring path of a packet sent out from each optical add/drop multiplex type node apparatus can be held to less than 0.1 ns.

Packet bits are not synchronized to each other, and therefore, it is necessary to establish bit synchronization for each packet in the receiver of the optical node apparatus. If the bits are synchronized at the leading bit of each packet, in order to match the bit phase at the packet tail, it is necessary that the clock precision $\Delta f$ (Hz) for packet decompression provided in each T-0 optical add/drop multiplex type node apparatus obeys an expression, $\Delta f \leq \gamma/Tb$, where Tb is a pre-compression packet duration and $\gamma$ is the permissible error of the bit phase at the packet tail. If the clock frequency of the pre-compression packet is 40 GHz, packet bit length L=12000 bits and $\gamma$=2 %, the frequency precision necessary is 66.7 kHz so that each optical node apparatus should be provided with an independent clock having such a precision. In this case, only the bit phases within the preamble time at the head of the packets are synchronized. By choosing the preamble time of 4 ns and using a phase comparison circuit such as microwave mixer, it is possible to provide bit phase synchronization for each packet.

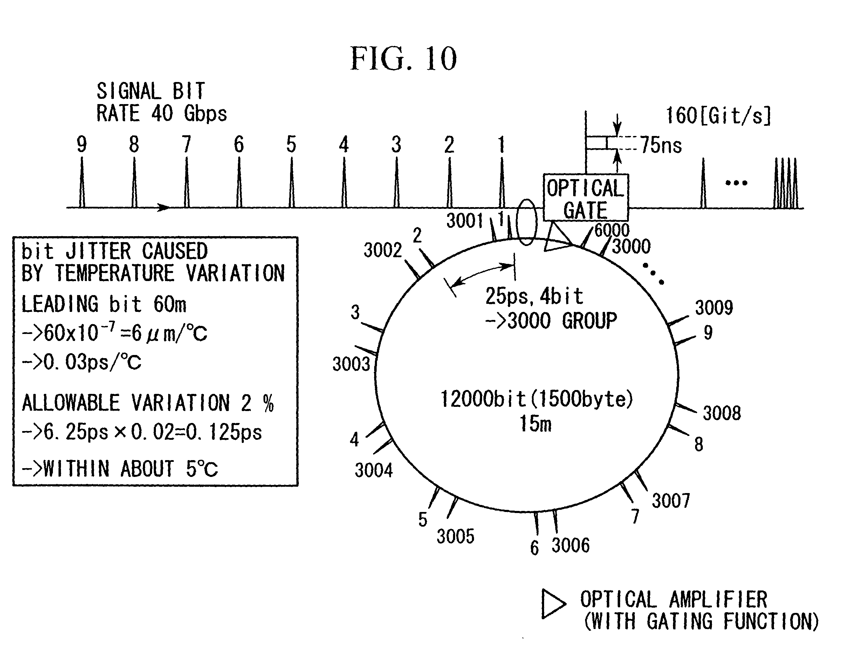

In this example, optical packets at 40 Gbps are compressed to 1/4 at 160 Gbps and added into the ring path side. The configuration of the optical add/drop multiplex type node apparatus is the same as that shown in Figure 2. The bit length of the optical packets to be input into the packet compression circuit is fixed at 1500 bytes. An example of the configuration of the packet compression circuit is shown in Figure 10.

If the length of the pulse compression/decompression loop varies with passage of time, the bit spacing after compression/decompression processes can become non-uniform, and therefore, it is necessary to stabilize the effective length of the loop. Then, the parameters such as, thermal coefficient of expansion $\beta$ (/°C), temperature variation $\Delta T$ (°C) and a permissible non-uniformity in bit spacing $\gamma$ ($0<\gamma<1$) must satisfy a relation:

$$\beta N L \Delta T < \gamma$$

where N is a packet compression ratio.

In the present design example, if $\gamma$= 2 %, for a retracted fiber of $\beta \sim 10^{-7}$, stability at room temperature within 5 °C is acceptable. The fiber loop length is about 15 m. In this example, the order of bits is interchanged between the input bit train and output bit train, but if the same loop length is used in the packet decompression circuit of the receiving node apparatuses, the original order of bits (pre-compression bit order) can be restored after packet decompression.

The optical switch may be a Mach-Zehnder interferometer type optical switch produced by forming waveguides in a lithium niobate crystal, $LiNbO_3$ and providing planar electrodes. In the commercially available switches, the technical level is sufficient to provide 10 GHz modulation bandwidth so that the switching shift time (time for switching between the cross state and bar state) can be held to less than 10 ns.

Guard time between optical packets is determined by considering the shift time of optical switch, walk-off times of optical packets and jitters in the label sending circuit. In this example, guard time was designed to be 1 ns including a margin of 0.7 ns. Together with the preamble time, overhead time used for purposes other than payload packet transfer within the transmission band is 5 ns producing an occupancy factor at 6%.

Label information is transferred between the neighboring nodes in the bit synchronized mode. One master node apparatus is provided for supplying the label clock to be used within the ring network. The packet phase of a packet that returned to the master node after travelling around the ring network is variable because the duration of propagating around the ring varies due to line expansion/contraction caused by surrounding temperature fluctuations in the ring fiber transmission path, so that the incoming packet phase does not necessarily coincide with the outgoing packet phase. For this reason, it is necessary to adjust the packet sending frequency (i.e., same as the label sending frequency) according to variations in the duration of ring rounding cycle so as to synchronize the packet sending frequency, at all times, to be a whole fraction of the ring rounding cycle.

An optical packet duration operating at 160 Gbps is 80 ns so that, if 80 bit-frames are used for label signals, the label bit rate is 1 Gbps, label sending frequency is 12.5 MHz. Therefore, Ethernet and such current electronic circuit technology can be used to process labels.

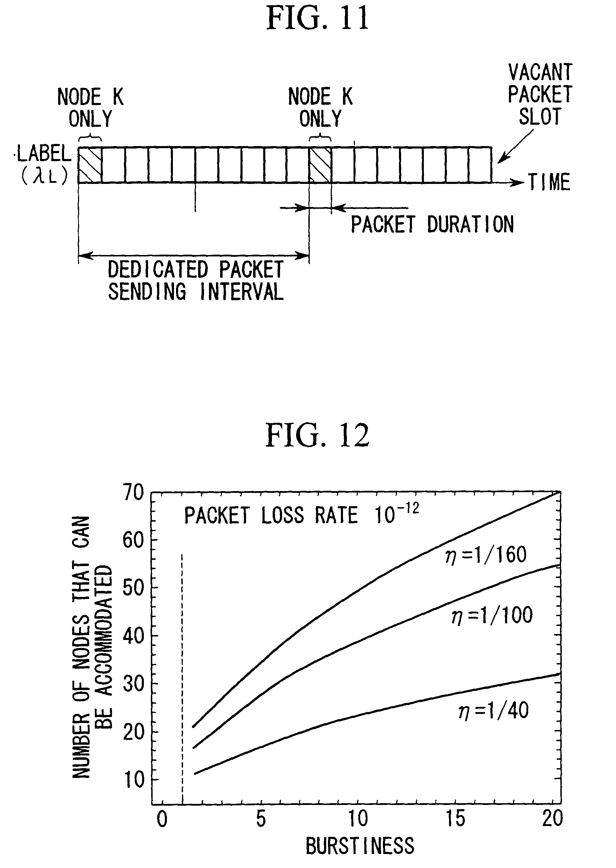

For providing a band guarantee, the master node apparatus for supplying clock signals may be used as shown in Figure 11 as the master node apparatus for dedicated label sending purpose. For example, for guaranteeing a band of 2 Gbps for an optical node apparatus k, labels addressed to the node apparatus k should be dispatched at a rate of 156.25 kHz (i.e., 1/80 of the label sending rate). Accordingly, other nodes in the ring network will let such packets to pass through to the node apparatus k so that the node apparatus k can offer guarantee packet adding at the minimum rate given by the above value.

An example of computation of the number of optical add/drop multiplex type node apparatuses that can be accommodated in the design shown above will be explained with reference to Figure 12. In this diagram, the burstiness is taken as the peak traffic with respect to the average traffic of packets input into the ring network. If the bit rate for the ring side is assumed to be 160 Gbps, the peak bit rate between every pair of the optical node apparatuses is assumed to be 1 Gbps, and the burstiness of input packets is assumed to be 5, it is possible to accommodate thirty-six optical add/drop multiplex type node apparatuses in a ring network.

In general, network transfer delay time is a total sum of the packetizing/ depacketizing delay in the send/ receive optical node apparatuses, queuing delay and switching-delay of each passing optical node apparatus, and propagation delays in the transmission path. In this example, transfer of ultra-highspeed optical packets is not carried out by converting optical signals to electrical signals in the sending node apparatus to recognize address information, but it is carried out by dropping or passing packets in the form of optical signals so that the transfer processing capability is not limited by bottlenecks in electrical circuits. Packet processing by electrical circuit is performed in the sending node apparatus and in the receiving node apparatus, and in those optical node apparatuses that simply allows packets to pass through, optical signals are cut-through without any change. In the sending node apparatus, queuing is experienced only when packets are being added and the amount of delay is insignificant.

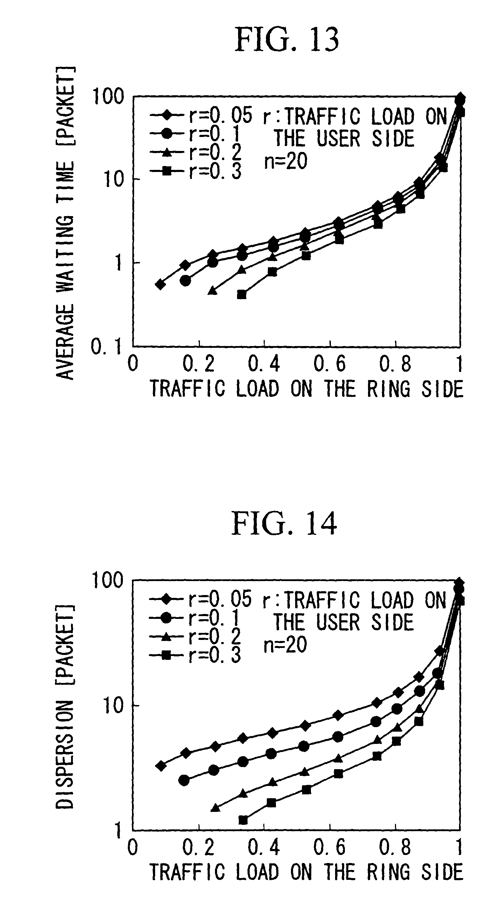

Figure 13 shows queuing delay, and Figure 14 shows computational examples of variations in queuing delay. Even when traffic load on the user side is around 0.6, delay is less than an amount that is equivalent to 10 packets. In this example, because ultra-highspeed packets are used, packet delay is insignificant. In the embodiment, one packet duration is 80 ns, even if queuing delay is as high as a 10-packet value, it is only 0.8 µs which is extremely short so that the total transfer delay is approximately equal to the propagation delay. Also, the delay fluctuation is also due to queuing delay variation at the sending node apparatus, which is sufficiently small as same. If an application does not permit delay fluctuation of even several packets, the use of the band guarantee algorithm described above will assure packet transfer that does not have any delay fluctuation and guarantees a minimum level of accessible band.

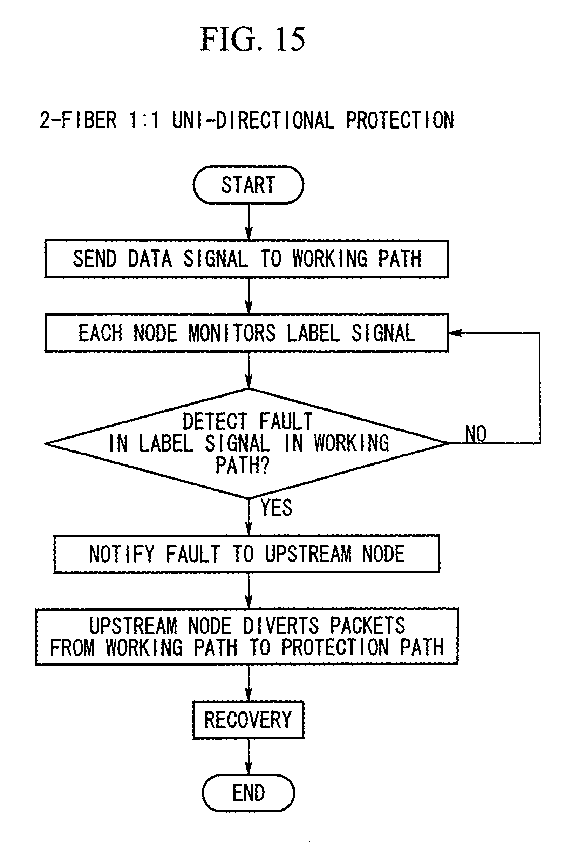

Next, protection methods for the label switching network will be explained with reference to Figures 15～33.

Conventionally, in a LAN (local area network) comprised by a packet-based label switching network, monitoring of fault and notifying maintenance operation information are carried out by exchanging maintenance operation managing packets according to routing protocol. Also, an information terminal receiving a packet detects any errors in the packet, and if there is any error, packet re-sending is requested, however, it does not mean that the quality of transmission path between two points is being monitored.

In a WAN (wide area network) comprised by a label switching network, because the node separation distances are large, a path is setup between two geographic locations, and labels are multiplexed with SDH (synchronous digital hierarchy) frames or SONET (synchronous optical network) frames. Then, monitored bytes in the overhead of the transmission frames are used to monitor the quality, and if an abnormal state is detected, automatic switching bytes are used to control switching.

Also, a technique is disclosed in an international patent application published in the PCT (Patent Cooperation Treaty) "Redundant path data communication", Publication Number W0 00/13376, International Publication Date 9 March 2000, as follows. That is, when sending a same packet through different paths in a label switching network, if the packet is lost on the way, the packet sent through the protection path is received. And, packet losses are tallied and when the total exceeds a threshold value, an error is reported or recorded. However, such a technique cannot detect fault until a packets have been delivered and because the fault can only be detected at the receiving node, it is not possible to find out where the fault occurred. Also, because the line quality is not being monitored constantly, highspeed switching is not possible. Also, in the international publication cited above, algorithm and structure of the node apparatus for dealing with faults are not described so that technical details are unclear.

Packet-based label switching network is highly efficient in band usage for burst traffic between links such as data communication between computers, but in the conventional method in LAN, as the inter-nodal distance increases, it is necessary to exchange maintenance managing packets quite frequency in order to raise reliability of protection and speed, resulting in lowering the throughput of actual data. In WAN, transfer is not packed-based, and according to SDH (including SONET) method, the line quality is constantly monitored so that, although highspeed protection is possible, band utilization of the link is reduced for burst traffic because a certain path between two locations is reserved regardless of the state of traffic.

In the present invention, such problems have been taken into consideration, and a protection method for a packet-based transfer network is provided to realize not only high throughput for burst traffic but a protection method of equal or higher reliability than SDH is provided, due to constant monitoring of the line quality.

By overcoming the conventional problem in the optical packet transfer network that highspeed and high reliability protection of data sent in the form of optical packets has been difficult, the present invention also provides a quality control method to enable high reliability and highspeed switching for the optical packet network.

Various embodiments of the protection method will be explained with reference to Figures 15 to 33.

In the label switching network that transfers packets based on label address information, several bits for detecting or correcting errors in the transmission system are added to a label information frame, and the node checks line quality by monitoring the label of each packet. Monitoring is carried out by adding to an n-bit label signal the parity bit consisting of one bit for parity check such that the number of "1s" of the (n+1) bits is predetermined to be always even or odd. As a result, bit error rate can be computed, thereby enabling to monitor a line quality between two locations.

<2-fiber 1:1 uni-directional ring network>

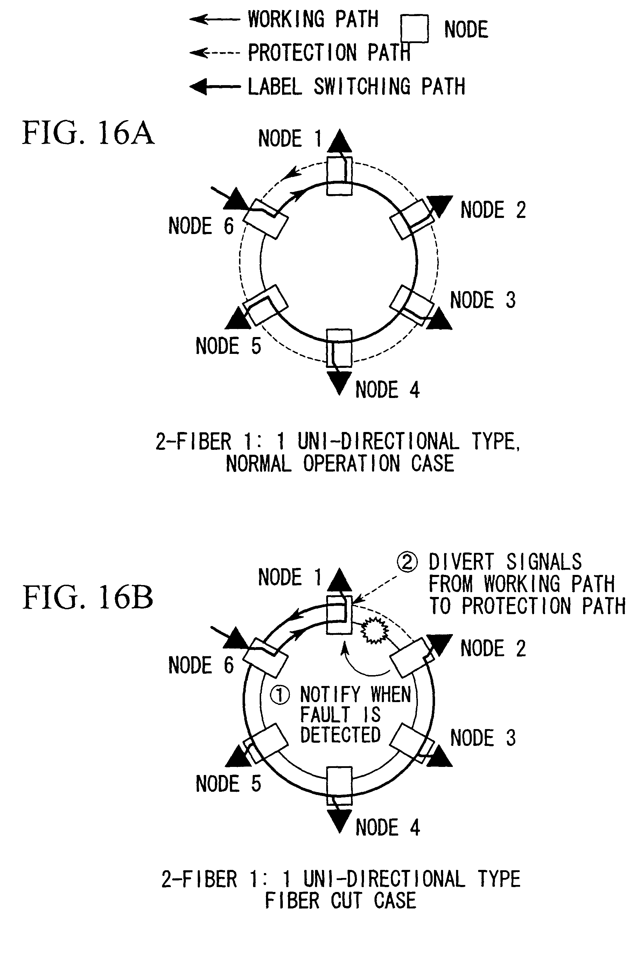

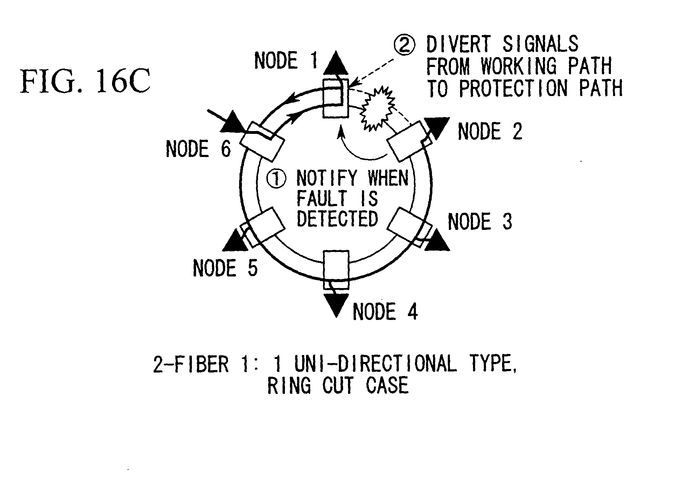

Figure 15 shows a flowchart for abnormality detection in a 2-fiber 1:1 uni-directional ring network. Figures 16A, 16B and 16C show schematic diagrams of label switched paths for the cases of normal operation, fiber cut and ring cut, respectively. Fiber cut means that either the working or protection group fiber is severed. Ring cut means that the ring between nodes is severed in some location.

Various modes of switching shown in Figures 16A, 16B and 16C will be explained with reference to the flowchart in Figure 15. During normal operation, one of the two fibers is designated for working path and the other fiber is designated as protection path. Each node sends data packets through the working path. As an example, node 6 sends packets to each node through label switching, as shown in Figure 16A. The receiving node receives packets through the working path and monitors the quality of label signals in the working path. As shown in Figures 16B, 16C, if a transmission fault (fiber cut and ring cut, respectively) occurs between node 1 and node 2, node 2 detects abnormal state in the label signals in the working path. When the quality of the signal falls below a specific level, an upstream node 1 is notified through the protection path or an operational network (not shown), and node 1 diverts signals in the working path to the protection path to avoid the fault location. After the transmission path is restored, transmission path can be reverted to the working path.

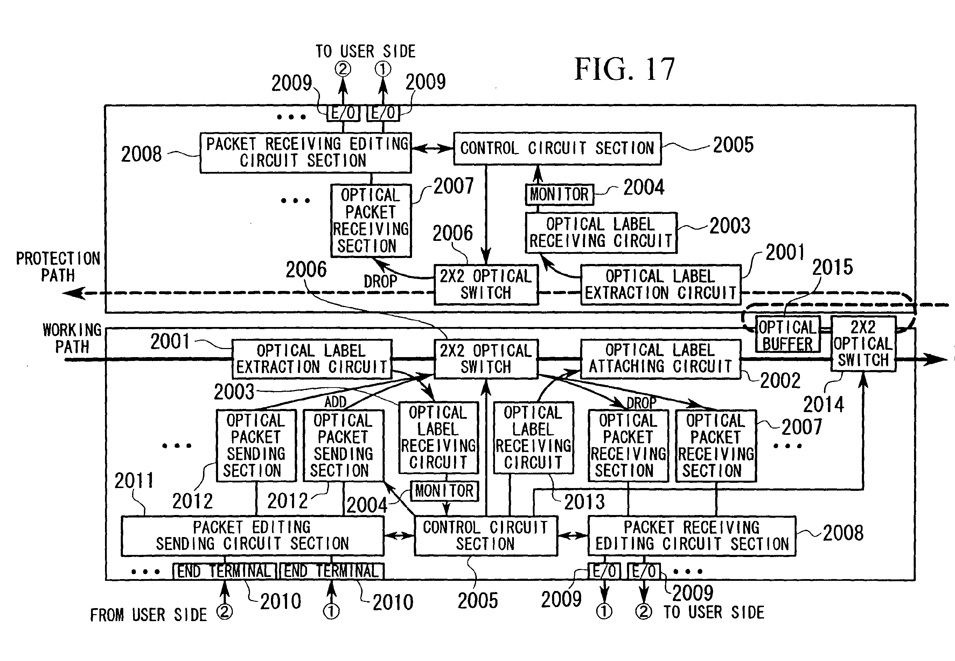

Figure 17 shows a block diagram of an example of the node configuration that operates according to the algorithm for fault bypassing or transmission path restoration. An optical label extraction circuit 2001 extracts an optical label from an optical packet arriving in this node through the ring network, and the extracted optical label is subjected to O/E conversion in the optical label receiving circuit 2003. A monitor 2004 monitors electrical label signals generated by optical to electrical signal conversion.

According to the label information, an optical packet addressed to its own node is dropped from the ring side in the 2x2 optical switch 2006, and the dropped packet is received in the optical packet receiving circuit 2007 and is subjected to O/E conversion. The electrical signal is edited to the original pre-edited packet in the packet editing receiving circuit 2008, and is transferred to a user address.

Signals input from the user side are terminated electrically in the terminating circuit 2010 according to a relevant interface protocol. In the packet editing sending circuit section 2012, packet data section, the sender/receiver addresses and service information (priority degree, allowable delay and the like) are electrically buffered temporarily. At this time, packets having the same destination address or a same priority degree may be grouped into new respective packets. Also, a label signal that includes an address of the receiving node apparatus or routing to the receiving node apparatus is prepared and notified to the control circuit section 2005. The control circuit section 2005 measures timing for adding packets to the ring side, and sends a trigger signal to the optical packet sending circuit 2012 to add the packet to the ring side.

Also, if an abnormal state is detected by the monitor 2004 monitoring the label signals, the control circuit section 2005 carried out a switching operation by placing the 2x2 optical switch 2014 in the cross state so as to divert the signals from the working path to the protection path. Optical packets in the protection path are processed by the same operational steps as described above, and those packets addressed to its own node are dropped from the ring side and other packets are cut-through without any change.

Also, in Figure 17, a reference numeral 2009 refers to an E/O converter for transferring packets received in the packet editing sending circuit section 2008 to the user side.

<2-fiber 1+1 uni-directional ring network>

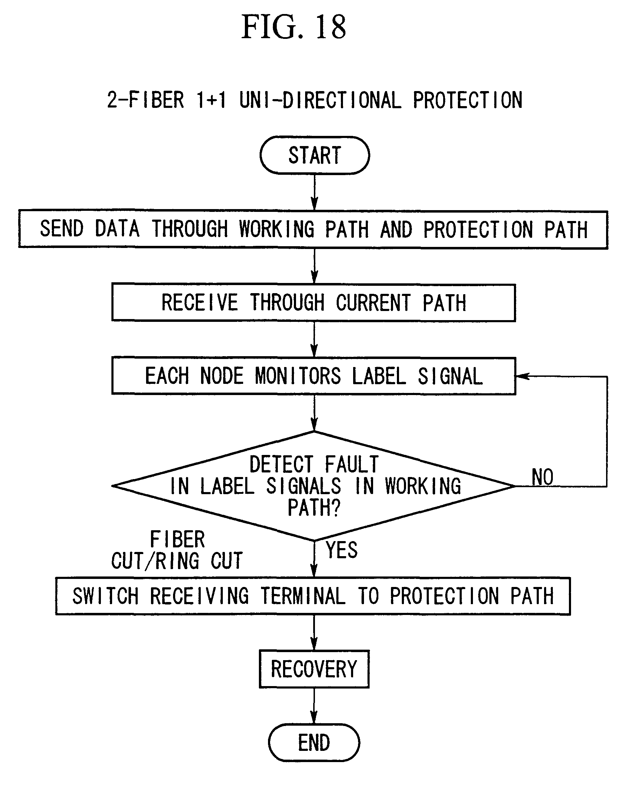

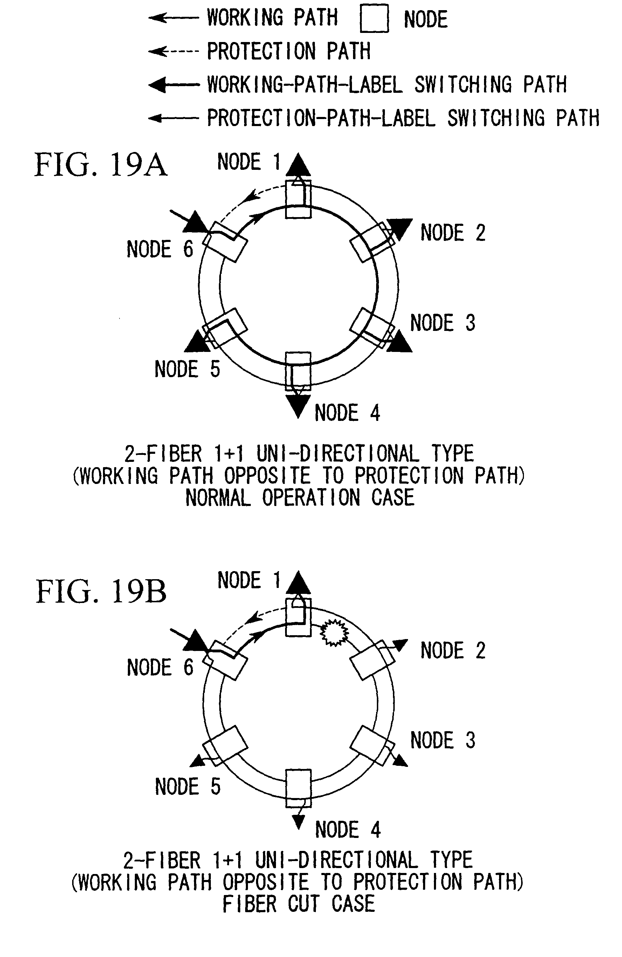

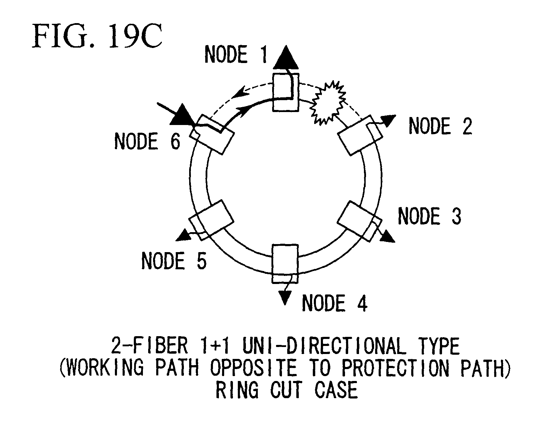

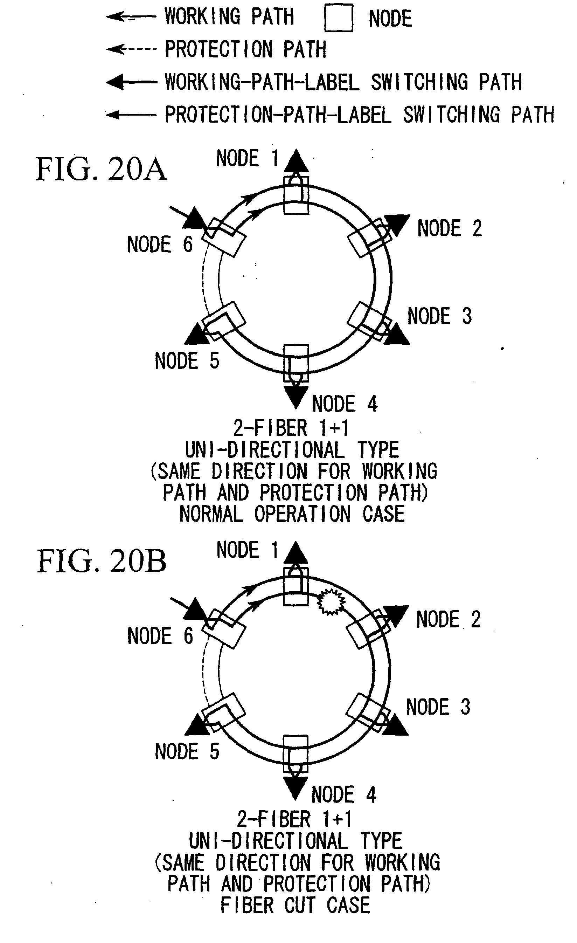

Next, the case of 2-fiber 1+1 uni-directional ring network will be explained. Figure 18 shows a flowchart for abnormality detection in the ring network. Figures 19A, 19B and 19C show schematic diagrams of label switched paths when the direction of packet transfer in the working path is opposite to that in the protection path for the cases of normal operation, fiber cut and ring cut, respectively. Figures 20A, 20B are schematic diagrams of label switched path when the transfer direction in the working path is the same as that in the protection path.

Various modes of switching shown in Figures 19A, 19B and 19C will be explained with reference to the flowchart in Figure 18. During normal operation, each node sends packets through both label switched paths comprised by the working path and protection paths. As an example, node 6 sends packets to each node through the working path and protection path as shown in Figures 19A and 20A. The receiving node receives data through the working path, and electrically terminates label signal in both monitors in the working path and protection paths to monitor signal quality. If a fault (fiber cut or ring cut) occurs between nodes 1 and 2 as shown in Figures 19B, 19C, 20B, abnormal state is detected only in the label signals in the working path. If the signal quality drops below a specific level, the node switches the receiving terminal to the protection path. Figures 19B, 19C, 20B show label switched paths from node 6 to other nodes in such a case. It should be noted that in the 2-fiber 1+1 type network, if a ring cut occurs in a network having the same transfer direction in both working and protection paths, it is not possible to transfer to the protection path to avoid the fault.

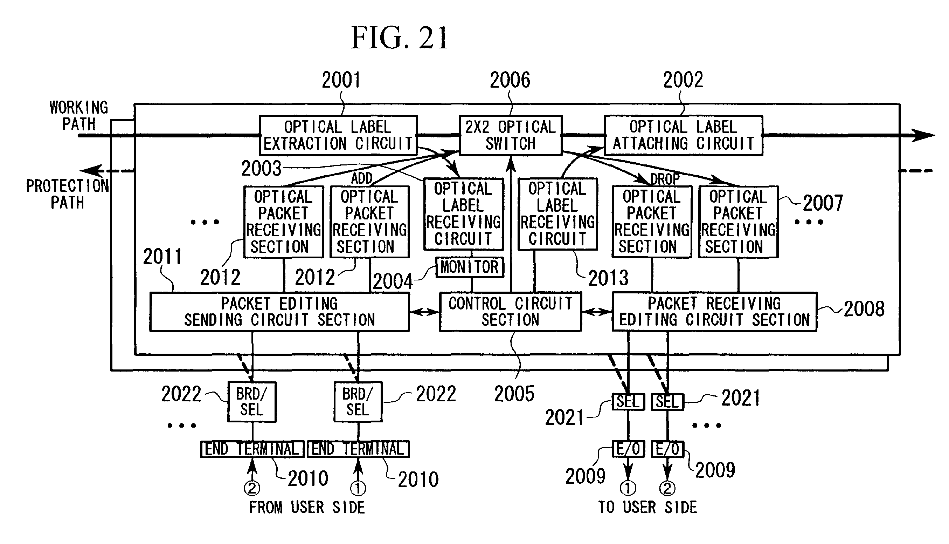

Figure 21 shows a block diagram of the node configuration when the transfer direction in the working path is opposite to that in the protection path. In Figure 21, a reference numeral 2021 refers to a selector to select packets from the packet receiving editing circuit section 2008 in the working path or from the packet receiving editing circuit section in the protection path. Also, 2022 refers to a bridge/selector that functions as a bridge for sending same packets to both working path and protection path during normal operation, and functions as a selector for sending the packet to either the working path or the protection path during ring cut. It should be noted that, although Figure 21 shows a case of the transfer direction being opposite in the working path and protection path, if the transfer direction is the same in both paths, a similar configuration that produces the same transfer direction can be used.

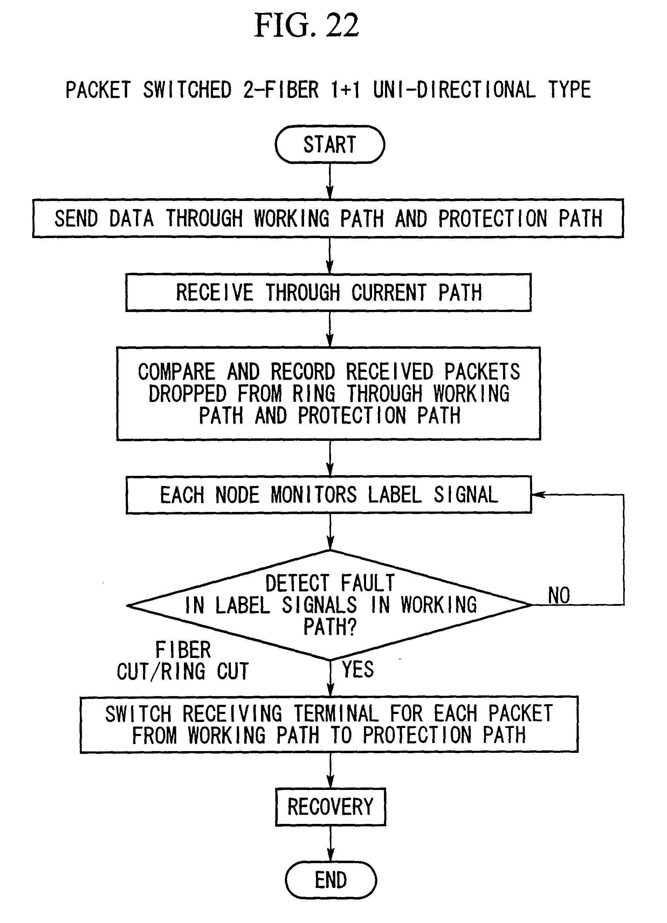

It is permissible to add steps for comparing and recording packets received in both paths in the flowchart shown in Figure 18. Such steps are shown in the flowchart in Figure 22. Processing steps shown in Figure 22 include comparison and recording steps for the packets dropped from the ring network in both the working and protection paths. By so doing, switching of receiving terminal from working path to protection path for each packet is made possible when a fault is developed, thus enabling to fully utilize network resources such as optical fibers, nodes and available bands.

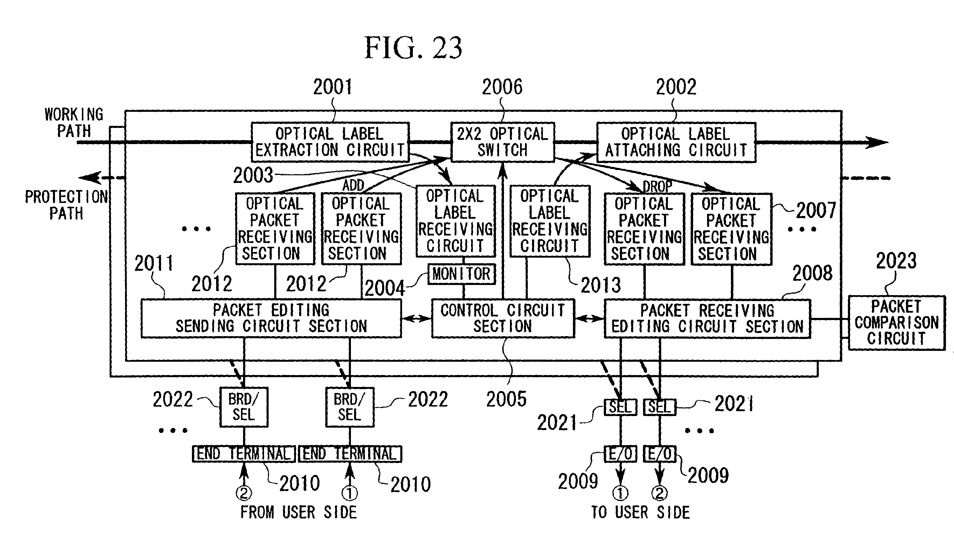

Figure 23 shows a block diagram of the configuration of a packet switching type node to perform the steps shown in Figure 22. The feature of the configuration shown in Figure 23 is a provision of a packet comparison circuit 2023 for comparing a packet received in the packet editing receiving circuit 2008 in the working path and a packet received in the packet editing receiving circuit 2008 in the protection path.

<4-fiber 1:1 bi-directional ring network>

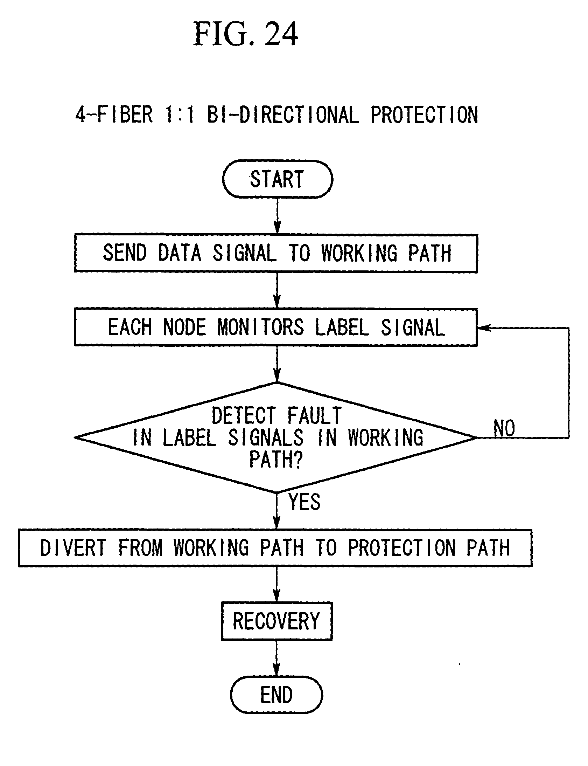

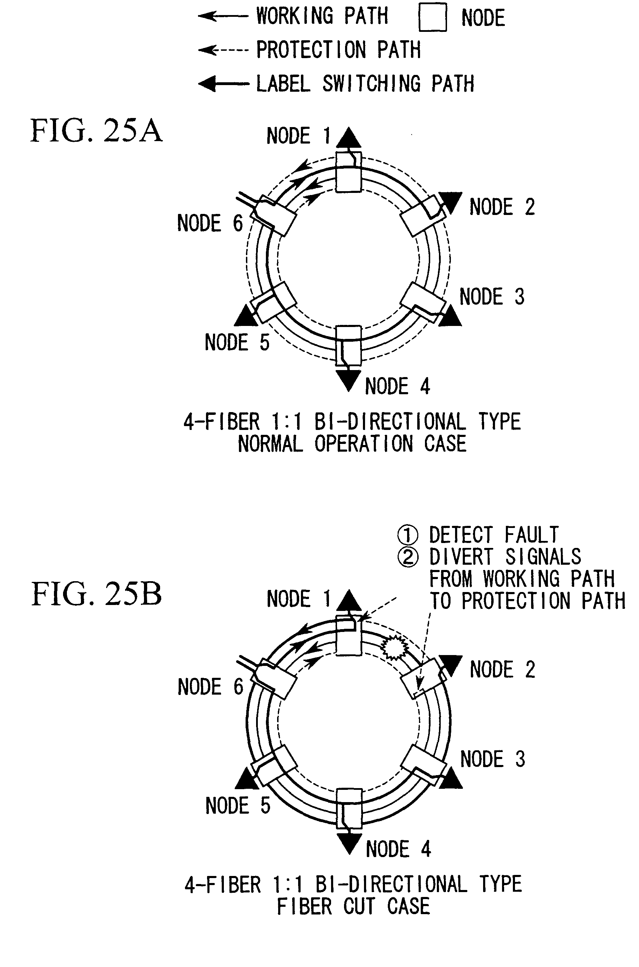

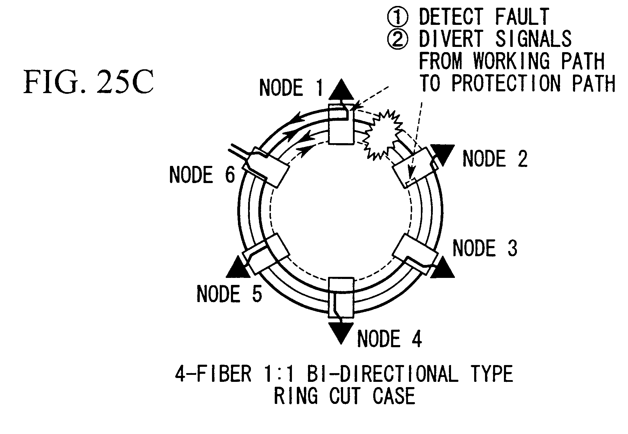

Next, a case of 4-fiber 1:1 bi-directional ring network will be explained. In the network of this type, both the working path and the protection path are provided with bi-directional optical signal transmission paths. Figure 24 shows a flowchart of the process of abnormality detection in this type of network. Also, Figures 25A, 25B, 25C are schematic diagram of label switched paths in the cases of normal operation, fiber cut and ring cut.

Various modes of switching shown in Figures 25A, 25B, 25C will be explained with reference to the flowchart in Figure 24. During normal operation, each node sends packet in the direction of minimum distance path through the working path. As an example, node 6 sends packets to each node according to the label switched path shown in Figure,25A. The receiving node receives packets in the working path and monitors signal quality in the respective monitor. If a fault (fiber cut or ring cut) develops between nodes 1 and 2 as shown in Figures 25B, 25C, node 1 and node 2 detect an abnormal state in label signals. If the signal quality drops below a specific level, node 1 and node 2 diverts signals to the protection path.

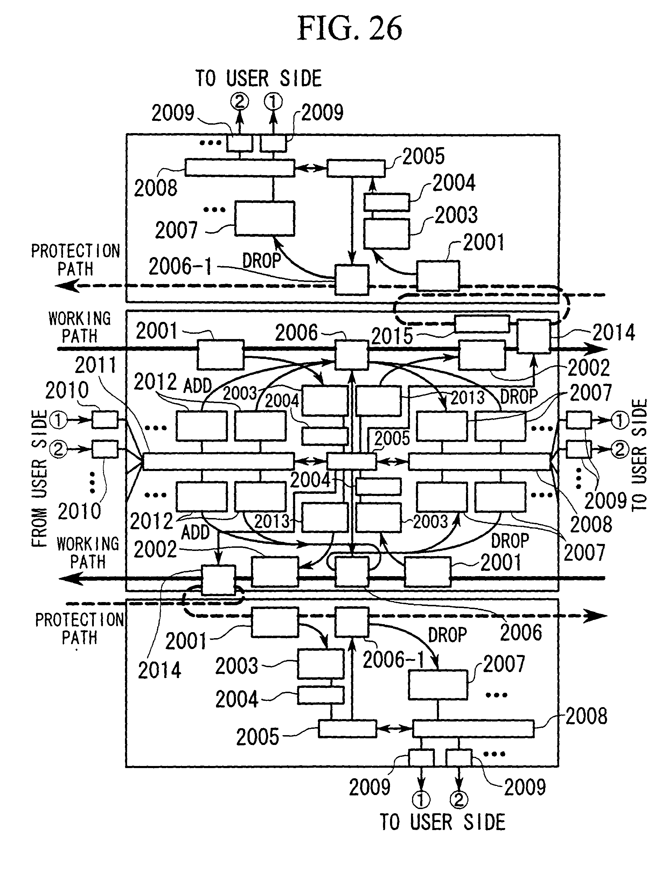

Figure 26 shows a block diagram of the node configuration that can perform the operation of fault bypassing in the 4-fiber 1:1 bi-directional ring network. In this node configuration, an optical label extraction circuit 2001, an optical label receiving circuit 2003 and a monitor 2004 are provided in each fiber of the four fibers to monitor signal quality constantly in each fiber. Also, optical packets addressed to its own node are dropped in either the 2x2 optical switch 2006 or 1x2 optical switch 2006-1, received in the optical packet receiving circuit 2007, edited in the packet editing sending circuit section 2008 and are sent out to the user side. Also, send packets are edited in the packet editing sending circuit 2011, sent by the optical packet sending circuit 2012 and are added to the ring side in the 2x2 optical switch 2006.

During normal operation, packets are sent in both directions through the working path according to respective addresses, and if a label signal abnormality is detected by the monitor, 2x2 optical switch 2006 is placed in the cross state to switch from the working path to the protection path.

<4-fiber 1+1 bi-directional ring network >

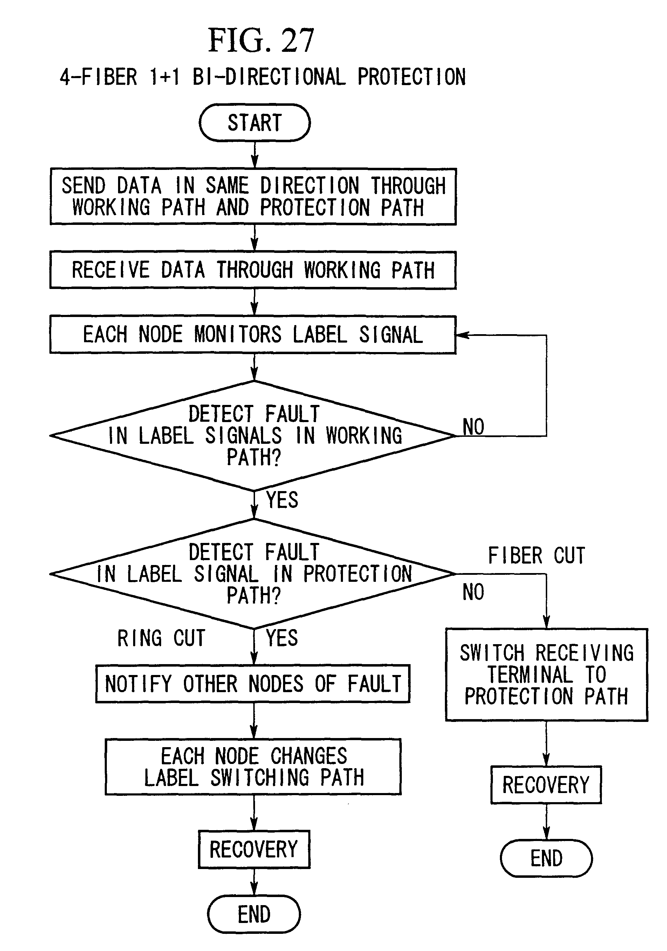

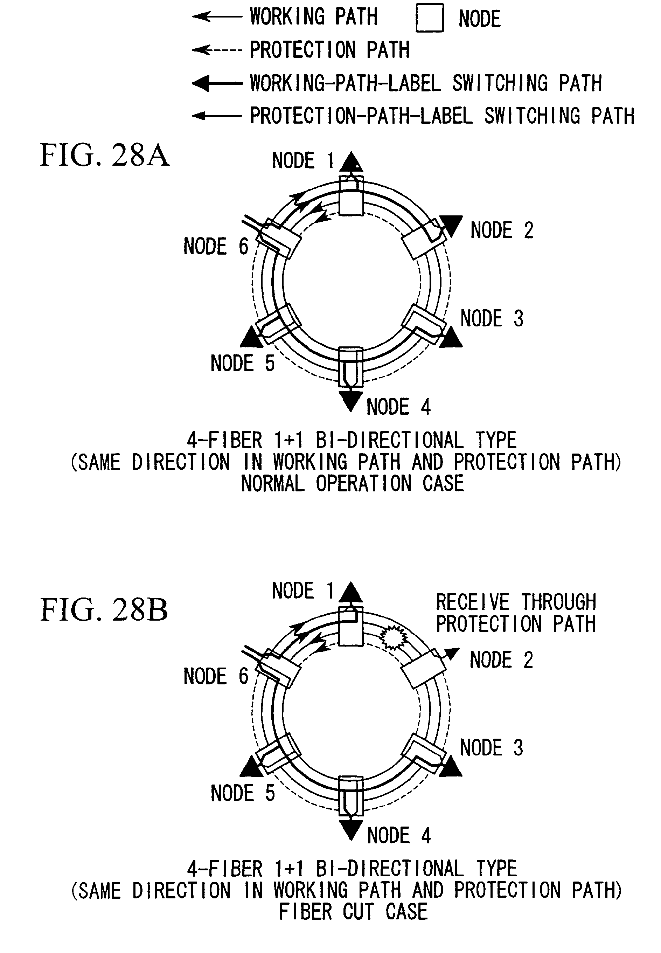

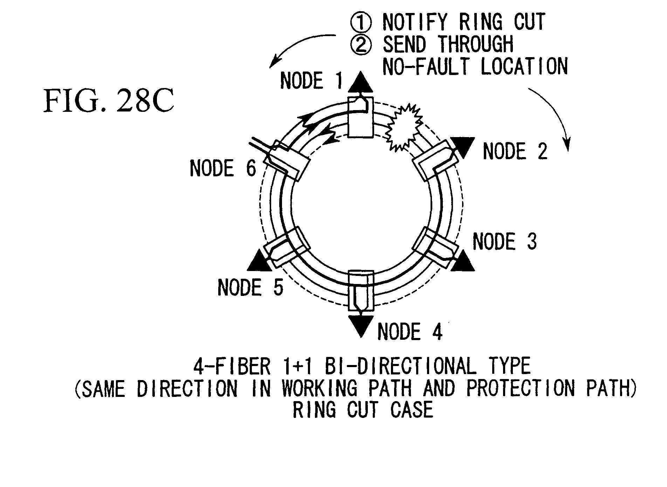

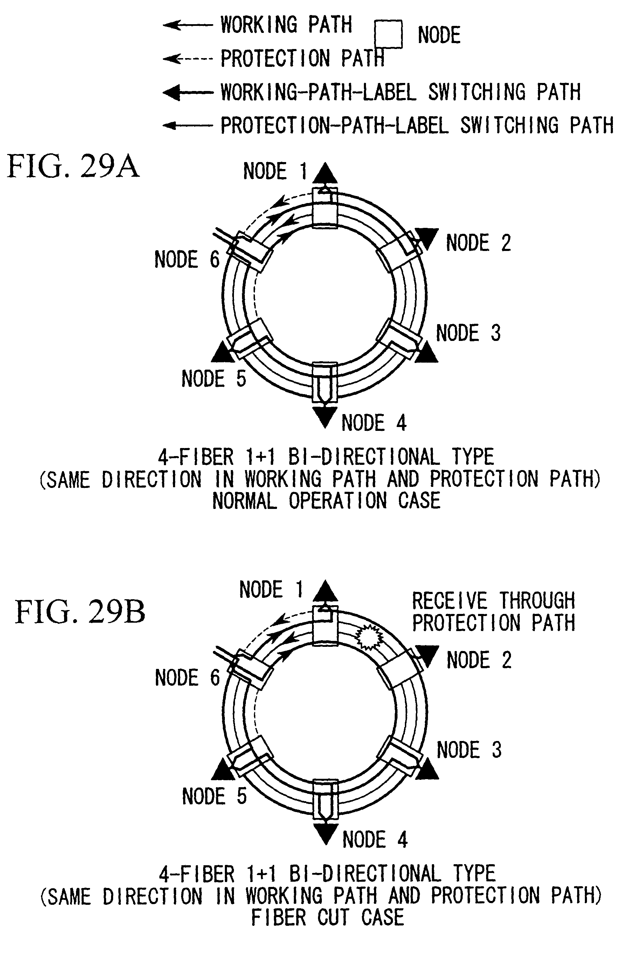

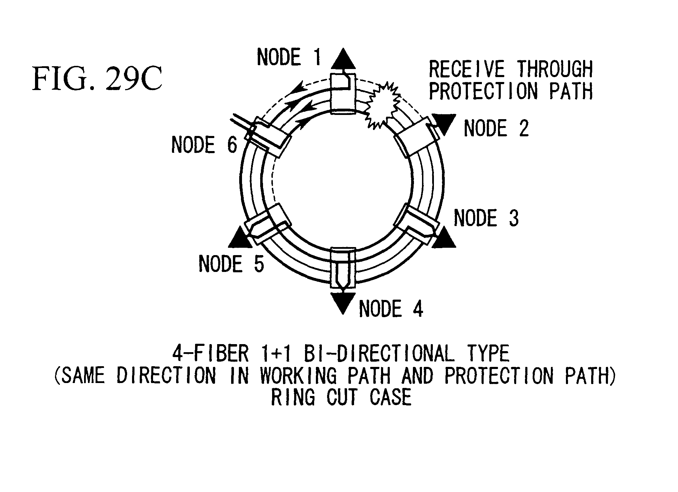

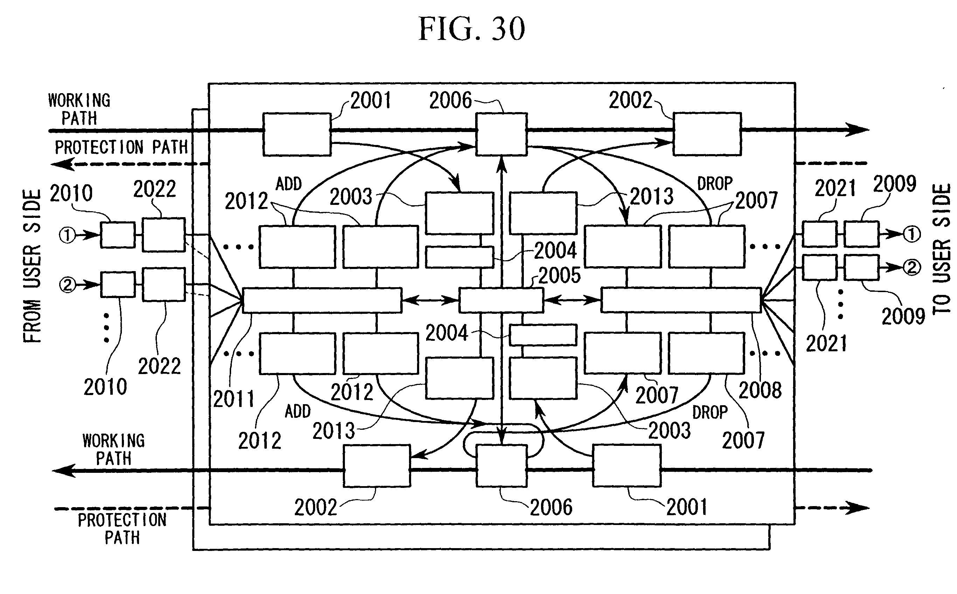

Next, a case of the 4-fiber 1+1 bi-directional ring network will be explained. Figure 27 shows a flowchart of the process when an abnormal state is detected in the network of this type. Figures 28A, 28B and 28C show schematic diagrams of label switched paths when the direction of packet transfer in the working path in the protection path is the same as that in the protection path for the cases of normal operation, fiber cut and ring cut, respectively. Figures 29A, 29B, 29C are schematic diagrams of label switched paths when the transfer direction in the working path is the opposite to that in the protection path, in the cases of normal operation, fiber cut and ring cut, respectively. Figure 30 is a block diagram of the node configuration when the direction of transfer in the working path is opposite to that in the protection path in the 4-fiber 1+1 bi-directional ring network.

Various modes of switching shown in Figures 28A, 28B, 28C, 29A, 29B, 29C and 30 will be explained with reference to the flowchart in Figure 27. During normal operation, each node sends packets in the minimum distance direction (label switched path) in the working path and the protection path. As an example, node 6 sends packets to each node according to the label switched path shown in Figures 28A and 29A. The nodes monitor the label signals of all the packets at all times.

Here, let us consider a case of a fault generation (fiber cut) in the transmission path between node 1 and node 2 as shown in Figure 28B and 29B. Nodes 1 and 2 detect abnormal states in label signals in the working path from the side of fiber cut location. At this time, because the protection path is not affected by the fiber cut, label signals in the protection path are normal. When the signal quality in the working path drops below a specific level, the receiving terminal is switched from the working path to the protection path.

Next, a case of a transmission fault (ring cut) occurring between nodes 1 and 2 will be considered. As shown in Figure 28C, if a ring cut occurs between nodes 1 and 2 in a ring network in which the transfer directions in the working path and the protection path are the same, node 1 and node 2 adjacent to the fault location detect label abnormal states in both the working path and the protection path, and recognize that a ring cut has developed. Then, packets in the ring network heading towards the fault location in the working and protection paths are dropped and are diverted to the reverse-direction working path and protection path. In other words, packets are transferred from the packet editing receiving circuit 2008 to the packet editing sending circuit 2011 shown in Figure 30 so that the received packets are forwarded in the reverse direction. In such a case, because the number of packets to be processed is increased and congestion is caused in some cases, traffic is dispersed by assigning the packets input from the user side into working and protection paths. And, ring cut is reported by using the working path, protection path or operational network. All the nodes receiving such a report select label switched path so as to avoid the fault location, and send the packets.

As shown in Figure 29C, when a ring cut occurs between nodes 1 and 2 in a network in which the transfer directions are opposite in the working and protection paths and the label signal quality drops below a specific level, the receiving terminal is switched from the working path to the protection path.

As shown in Figure 30, during normal operation, this node uses both working path and protection path to send packets to their respective destinations. Data input from the user side is terminated, and, during normal operation, the bridge/selector 2022 sends the same packets to both working path and protection path, and during ring cut, packets are sent by switching to either one of the two paths. For packet received from the ring side, the selector 2021 decides which of the two circuits, packet editing receiving circuit 2008 in the working path or packet editing receiving circuit 2008 in the protection path, will be switched for receiving packets.

It should be noted in Figure 30 that, although the example shows the transfer directions to be opposite in the working and protection paths, but a similar configuration can be used even when the transfer direction is the same in both paths.

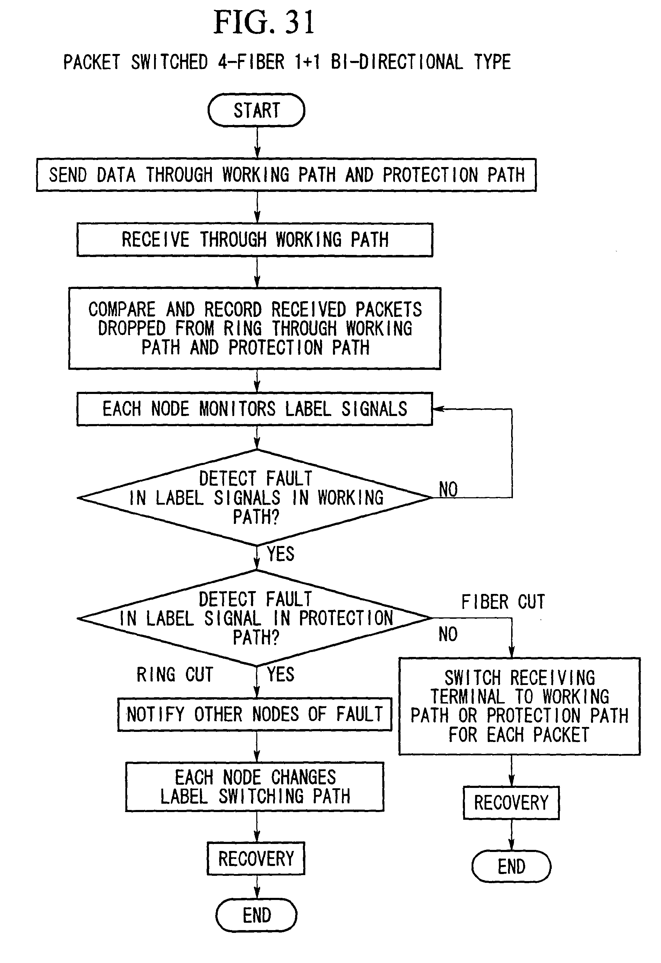

Steps for comparing and recording the packets received in two systems may be added to the flowchart shown in Figure 27. Such a process is shown in the flowchart in Figure 31. In the process shown in Figure 31, processing steps are shown for comparing and recording the received packets dropped from the working path and the protection path in the ring network. These steps perform packet switching of receiving terminal to the working and protection paths for each packet during fault operation, thus enabling to increase utilization of network resources such as optical fibers, nodes,, and available bands.

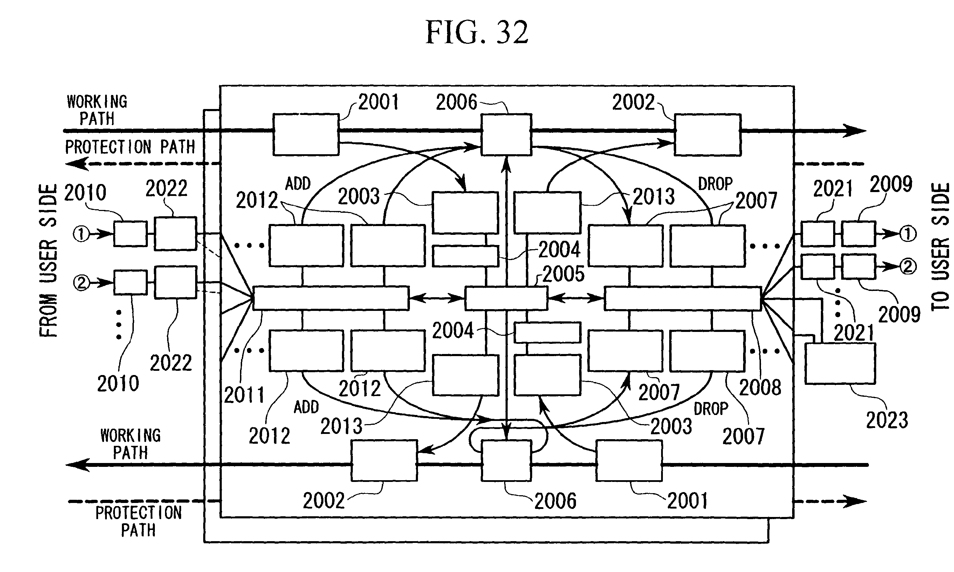

Figure 32 shows a block diagram of an example of the node configuration to perform the steps shown in Figure 31. The feature of the configuration shown in Figure 31 is that a packet comparison circuit 2023 is provided for comparing packets received by the packet editing receiving circuit 2008 in the working path with those in the protection path.

Next, in the optical packet transfer ring network described above, a case of identifying a node having a fault in the optical switch will be explained. This ring network refers to an optical ring network system described earlier, in which at least one optical node apparatus of the add/drop multiplex type node apparatuses has been designated to generate an authorizing label signal at a given rate containing an instruction that only a specified optical node apparatus having a specific address is authorized to add packets to the optical fiber transmission path, so that all other optical node apparatuses receiving the authorizing label recognize that packet adding is prohibited except to the specified node apparatus designated by the authorizing label as the originating node apparatus.

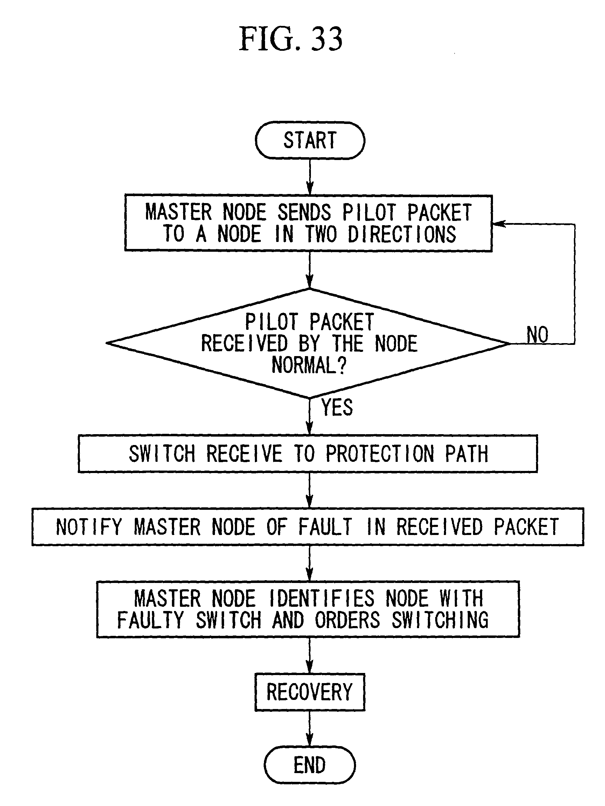

Figure 33 shows a flowchart for a fault location identification algorithm in such a network. As shown in Figure 33, the specified master node governing the ring network outputs bi-directional pilot packets to each node. The pilot packet is a defined data train. Each node receives this pilot packet and determines whether the content is normal, and the result of determination is reported to the master node through the working, protection or operational path. From these reports, the master node is able to identify which optical switch in the ring network is faulty. When the faulty node is identified, the master node notifies this node to exchange the faulty switch.

Using the technique described above, signal quality in the packet-based label switched network can be monitored constantly so that a protection system having high reliability and highspeed switching capability can be provided even in a wide area network that increases inter-nodal distances. By using such a protection system, it is possible to take advantage of the merits of the label switched network that offers high throughput and flexibility due to statistical multiplexing effects. Also, conventional techniques are able to monitor signal quality only by optical-electrical conversion of optical signals at each intervening nodes in the optical packet transfer network, but the present technique enables to monitor signal quality at all times because only the optical labels are electrically terminated.

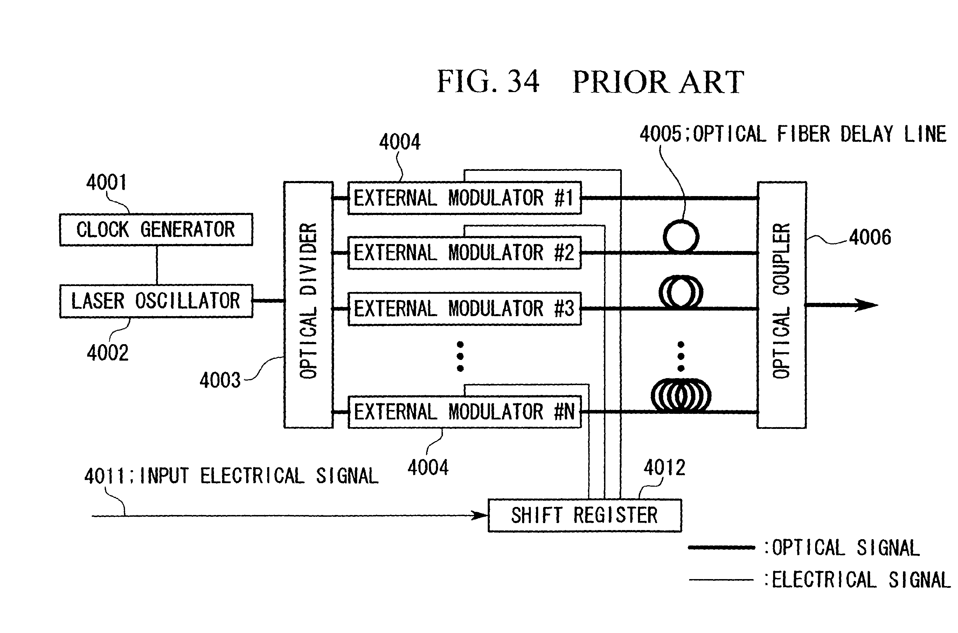

Next, optical packet compression and decompression circuits in the label switched network described above will be explained with reference to Figures 34~45.

The technology described below is able to accomplish interconnection within an ultra-highspeed optical packet transfer network as well as within a node apparatus that cannot be obtained by direct electrical/optical conversion methods. This technology relates to: means for raising the throughput in the packet-by-packet transfer network (packet-based network) by raising the bit rate from an electrical bit-rate region to a ultra-highspeed optical bit-rate region; means for decreasing the packet duration to reduce packet collision probability or queuing delay due to packet collision; means for preventing throughput reduction by packet compression, even during network traffic congestion periods; and means for reducing band occupation duration when sending a voluminous data to transmit data instantly.

There has been a problem that, when attempting to generate optical packets by direct E/O conversion to ultra-highspeed optical packets, the speed is limited by the electrical packet generation circuit and the response characteristics of optical modulation circuit. The structures of packet compression circuits according to conventional technology are shown in Figures 34, 35, 36.

In the packet compression circuit shown in Figure 34, optical pulse trains emitted from a laser oscillator 4002 are separated into N parallel lines through an optical divider 4003, and the pulse trains are delayed relative to others in the optical delay fiber lines 4005, and are multiplexed through an optical coupler 4006 to output an N-multiplexed bit train of optical pulses. Each external modulator 4004 controlled by the shift register 4012 modulates input electrical signals 4011. The delay amount in the N lines of optical delay lines 4005 is set respectively at $\Delta t \cdot c/n$, $2\Delta t \cdot c/n$, ..., $(N-1)\ \Delta t \cdot c/n$, where $\Delta t$ is an optical pulse spacing, c is the speed of light and n is a refractive index of the core.

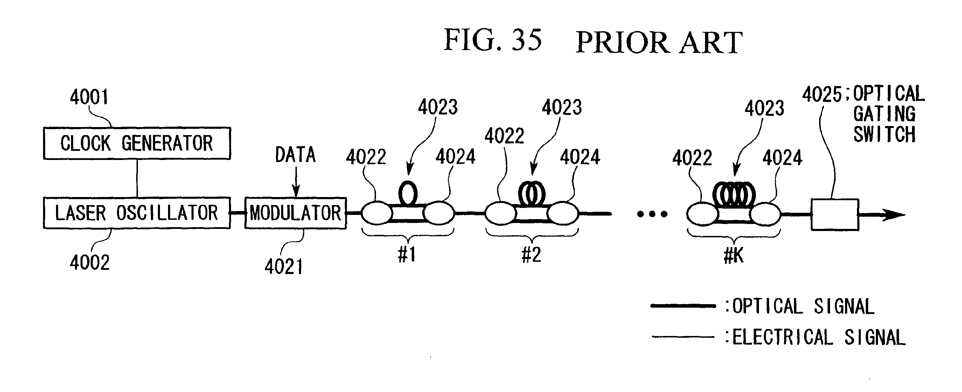

The optical packet compression circuit shown in Figure 35 has k-stages (k indicates the number of stages)of circuits, each stage comprised by a 1x2 optical switch 4022, an optical delay fiber line 4023 and a 2x1 optical coupler 4024. The 1x2 optical switch 4022 assigns all the odd numbered pulses upward and all the even numbered pulses downward, and the upper side pulses are delayed by the delay line 4023 and are coupled, after a slight time shift relative to the lower side pulses. When the pulses pass through k-stages of such circuits, the optical gating switch 4025 deletes excess pulses to generate highspeed pulses comprised by $2^k$ bits.

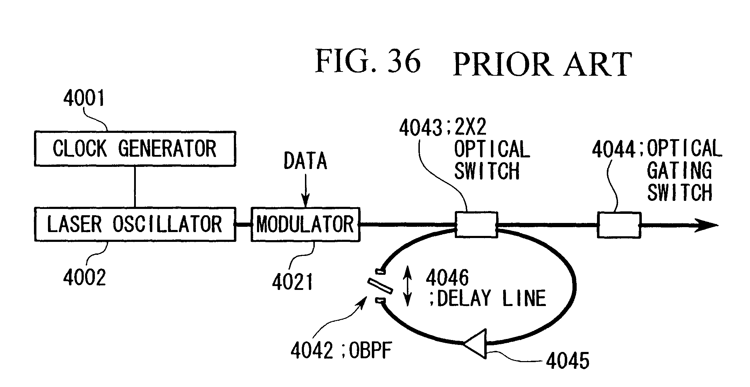

The optical packet compression circuit shown in Figure 36 is comprised by: a delay loop including an optical amplifier 4045, an optical bandpass filter (OBPF) 4042, a delay line 4046 and a 2x2 optical switch 4043; and an optical gating switch 4044. A portion of the pulse of the optical packet is looped through the delay loop so that the time interval to the next pulse is narrowed by the time interval spent in looping. By repeating such looping, time intervals between all the pulses are narrowed, then the 2x2 optical switch 4043 is put into the cross state and the total power is output. Then, using the optical gating switch 4044, only the optical packets subjected to packet compression are output.

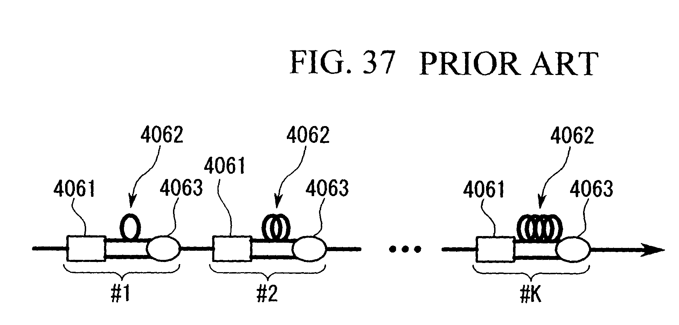

Figure 37 shows a block diagram of an optical packet decompression circuit that has a similar configuration as the optical packet compression circuit shown in Figure 35. The optical packet decompression circuit has k-stages of a circuit comprised by a 1x2 optical switch 4061, an optical delay fiber line 4062 and a 2x1 optical coupler 4063. The 1x2 optical switch 4061 assigns all the odd numbered pulses downward and all the even numbered pulses upward. Because a delay is generated in those pulses directed upward due to the fiber delay line 4062, the pulse spacing is doubled at the stage of being output from the 2x1 optical coupler 4063. After passing through such a circuit k-times, the pulse spacing is sufficiently enlarged and the sequence of input pulses is maintained. Optical packet so decompressed are subjected to O/E conversion in an photo detector (not shown).

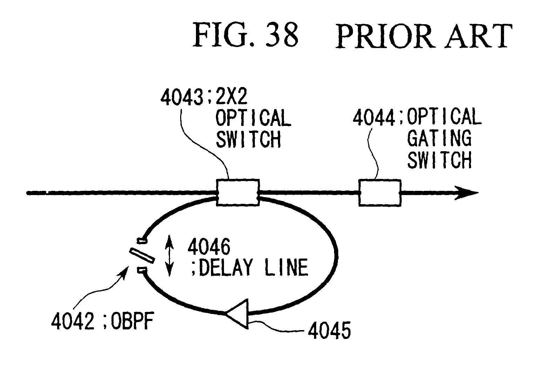

Figure 38 shows a block diagram of an optical packet decompression circuit that has a similar configuration as the optical packet compression circuit shown in Figure 36. This optical packet decompression circuit is comprised by a delay loop comprising an optical amplifier 4045, an optical bandpass filter (OBPF) 4042, a delay line 4046 and a 2x2 optical switch 4043; and an optical gating switch 4044. A pulse train loops through the delay loop, and the 2x2 optical switch 4043 extracts one pulse at a time starting from the leading pulse by delaying the pulses through the optical delay loop. Then, the optical gating switch 4044 transmits only the necessary pulses.

Such compression/decompression circuits according to conventional technology present following problems.

In the optical packet compression circuit shown in Figure 34, there is one optical compression circuit for one input data so that the throughput is the same as input electrical signals. Therefore, in order to increase the throughput to the extent to match the compressed amount, it is necessary to provide a number of optical packet compression circuits, resulting in increasing the scale and cost of the system.

In the optical pulse compression circuit shown in Figure 35, in order to compress an optical packet of L-bits, it is necessary to provide a circuit comprised by a 1x2 optical switch, an optical delay fiber line and a 2x1 optical coupler, in excess of $\log_2(L)$ stages. When circuits are connected in such stages, problems such as optical power loss, circuit scale and cost are increased. Also, because the optical delay fiber line becomes long, it is necessary to provide compensation for changes in fiber length due to thermal effects. Here, the number of stages necessary for compressing a packet of 1500 bytes (i.e., 12000 bits) from 10 Gbps to 100 Gbps is 19, then, the pulse velocity is given by:

$$c/n = 2x10^8 \text{ m/s}$$

where c is the speed of light and n is the refractive index of the core, so that the first pulse will propagate a total distance of 216 m through the optical delay fiber line, given by 12000x(100[ps]-10[ps])x($2x10^8$[m/s]). The coefficient of thermal expansion of optical fiber is in a range of $10^{-6}$ to $10^{-5}$/°C so that, if $10^{-5}$ is assumed, 216[m]x$10^{-5}$ gives 2.16 mm/°C. The necessary bit spacing $\Delta t$ is 10 ps, the light travels in the fiber $\Delta t \cdot c/n = 2x10^{-3}$m for $\Delta t$ times. Therefore, even if the jitter tolerance is assumed to be 1/100, the precision of optical fiber length required is less than 20 μm. In other words, to maintain the fiber length precision of less than 20 μm at a jitter tolerance of 1/100, it is necessary to maintain the temperature at a precision of less than 0.01 °C. In this case also, as the transmission speed approaches ultra-highspeed range, the degree of precision demanded for the optical fiber length and temperature becomes higher, and the technology becomes difficult to realize.

In the conventional compression circuit shown in Figure 36, the pulses in the front of the pulse train tend to pass through more delay loops so that they pass through the optical amplifier 4045 more frequently and the S/N ratio deteriorates. Changes in fiber length become a problem also. For example, when compressing a packet of 1500 bytes or 12000 bits from 10 Gbps to 100 Gbps bit rate, the first pulse will propagate a total distance of 216[m]=12000x(100[ps]-10[ps])x($2x10^8$[m/s]). In such a case, it is necessary to control the temperature at a precision of less than 0.01 °C or to control the timing of the delay line closely to achieve a precision of less than 20 μm variation in fiber length. Also, the number of packet pulses that can be compressed is limited by the length of the delay loop.

In the conventional optical packet decompression circuit shown in Figure 37, there is another problem in addition to the problems explained with reference to Figure 35 related to the optical packet compression circuit. That is, the 1x2 optical switch 4061 in stage-1 must respond at ultra-highspeed of less than a tenth of a pulse spacing in the optical packet. As the speed is increased, bit-phase synchronization becomes difficult also.

In the conventional optical packet decompression circuit shown in Figure 38, in addition to the problems explained in connection with the optical packet compression circuit shown in Figure 36, the following problems are of concern. That is, the 1 2x2 optical switch 4043 must respond at ultra-highspeed of less than a tenth of a pulse spacing in the optical packet. As the speed is increased, bit-phase synchronization becomes difficult also.

As explained above, using the conventional technologies only, it is difficult to compress or decompress a packet of 1500 bytes into ultra-highspeed optical packet of 10 Gbps or higher bit rate. An object of the present invention is to provide a technology that can be used generally but particularly for compression/decompression of optical packets of about 1500 bytes into bit rate in excess of 100 Gbps.

In the following, embodiments of the optical packet compression circuit and optical packet decompression circuit will be explained with reference to the drawings.

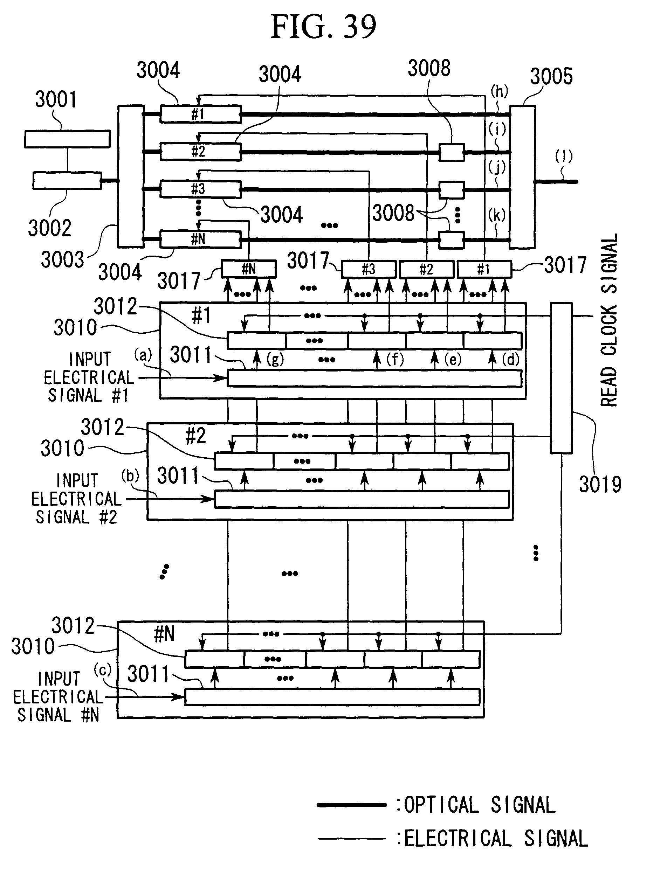

Figure 39 shows a block diagram of the configuration of the optical packet compression circuit according an embodiment of the present invention. Data signals (clock frequency 1/ΔT) input as electrical signals of N-trains (#1~#N) are input into respective buffering circuits 3010. Each buffering circuit 3010 has a serial/parallel conversion circuit 3011, and the electrical input signals are output as parallel N-trains through the serial/parallel conversion circuit 3011, and each of the N-trains is input into respective memories 3012. Memory 3012 has a capacity to match the packet length of the input electrical pulses, and outputs stored data N-bits at a time in parallel according to a read-clock signal. The read-clock signal is input into a clock signal control circuit 3019 at ΔT intervals, and the output of the clock signal control circuit 3019 is input into each respective memory 3012. N pieces of OR circuits 3017 compute respective logical sum of data output at the same time position from N pieces of memories 3012, and the output is used as a drive signal for a respective optical modulator 3004 to be described next. In other words, OR circuit 3017 has an effect of selecting one piece of signal from the N pieces of electoral signals.

In the meantime, optical pulses (repetition frequency 1/ΔT) are generated by a clock generator 3001 and a laser oscillator 3002, and are separated into N lines by the optical divider 3003, and are modulated in respective optical modulator 3004 in each separate signal line according to a drive signal from the corresponding OR circuit 3017, and the modulated signal is delayed in the optical delay line 3008 by a time interval Δt and is then multiplexed in the optical coupler 3005.

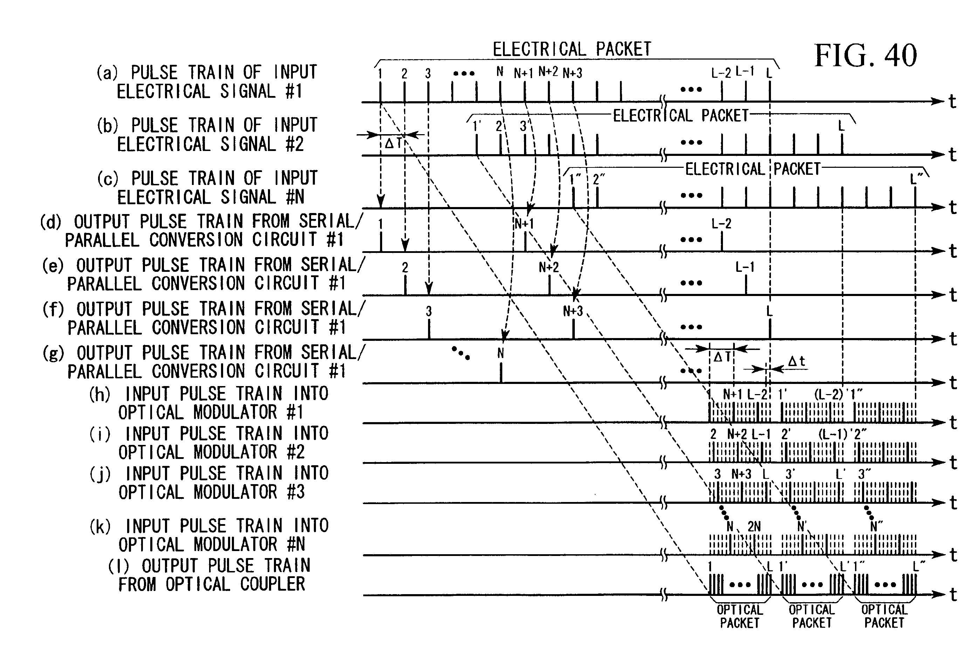

Figure 40 shows a timing chart to show the pulse train timing in individual ports of the optical packet compression circuit shown in Figure 39. Pulse trains (a) ~(1) in Figure 40 correspond, respectively, to lines (a) ~(1) in Figure 39. Input electrical pulse trains (a), (b), (c) shown in Figure 40 are separated by a pulse spacing of △T, giving a bit rate of 1/ΔT bits/s. The pulse train (a) in Figure 40 is input one pulse at a time into the memory 3012 as shown in pulse trains (d), (e), (f), (g) in Figure 40 through the serial/parallel conversion circuit. Then the pulses are read out from the memory 3012 according to the control signals output by the clock signal control circuit 3019. Ultra-short pulses output from an ultra-short pulse oscillator (laser oscillator 3002) are separated into N-lines in the optical divider 3003, and are modulated by the electrical signals read from the memory 3012. After the modulation step, optical pulse train in each port is delayed by an interval Δt in the optical delay line 3008 so that the pulse trains (h)~(k) in Figure 39 are changed to pulse trains (h)~(k) in Figure 40. The pulse trains are multiplexed in the optical coupler 3005, which outputs a plurality of optical packets in the form of optical pulse trains of △t intervals. In other words, a plurality of optical packets at a bit rate 1/△T bits/s are compressed to optical packets at a bit rate 1/△t bits/s.

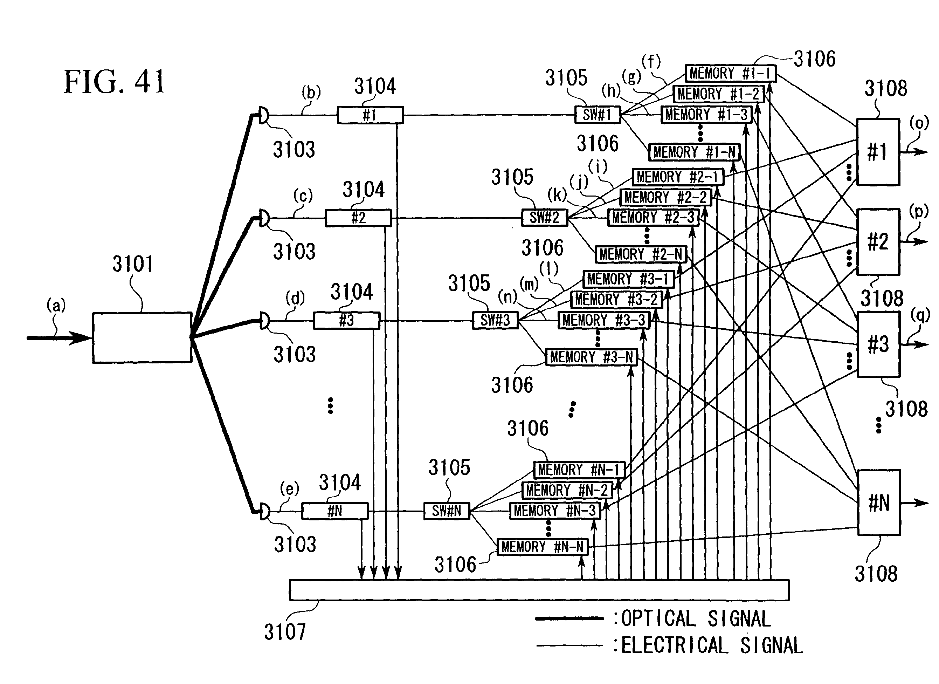

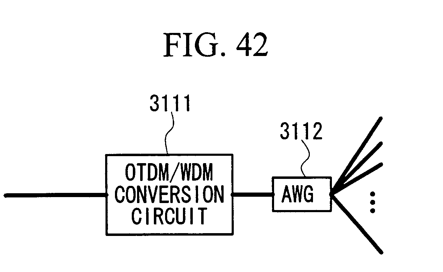

Figure 41 shows a block diagram of an embodiment of the optical packet decompression circuit. As shown in Figure 41, this optical packet decompression circuit separates each pulse of optical packet signal into N lines through a serial/parallel conversion circuit 3101, and repeats the process at a cycle of N pulses. An example of the optical serial/parallel conversion circuit comprised by OTDM/WDM (optical time division multiplexing/wavelength division multiplexing) conversion circuit 3111 and an AWG (arrayed wave guide) 3112 is shown in Figure 42. The AWG functions as a wave separation circuit. Embodiments of the OTDM/WDM should be referenced in K. Uchiyama et. al., "'Multiple-channel output all-optical OTDM demultiplexer using XPM-induced chirp compensation (MOXIC)", Electronics Letters, vol.34, no.6, pp.575-576, 19 March 1998, for example.

The optical pulse signal separated into N lines for each pulse are O/E converted by N pieces of photo detectors 3103, which are input into at least one start-bit detection circuit 3104. When a start-bit is detected, the start-bit detection circuit 3104 issues a trigger signal to the read circuit 3107. Electrical pulse signals that passed through the start-bit detection circuit 3104 are assigned by N pieces of switches 3105 to corresponding memories for each packet and are stored temporarily in respective electrical memory 3106. Then, the read circuit 3107 issues a read-signal to each electrical memory at ΔT intervals in accordance with the trigger signals, and begins reading contents of memories, starting with the electrical memory 3106 connected to the detected start-bit. Accordingly, the contents of each electrical memory 3106 are read out successively at ΔT intervals. Here, a memory i-j (3106) receives an input from switch-i and outputs to OR circuit-j (3108). The OR circuits 3108 output a logical sum of electrical signals output from the corresponding memory of the N-pieces of memories.

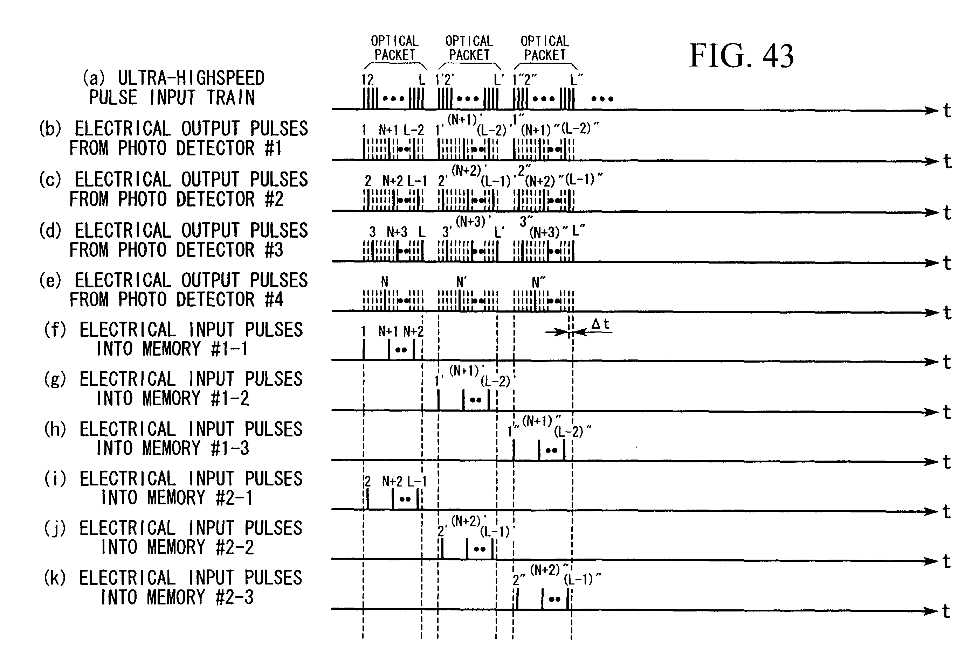

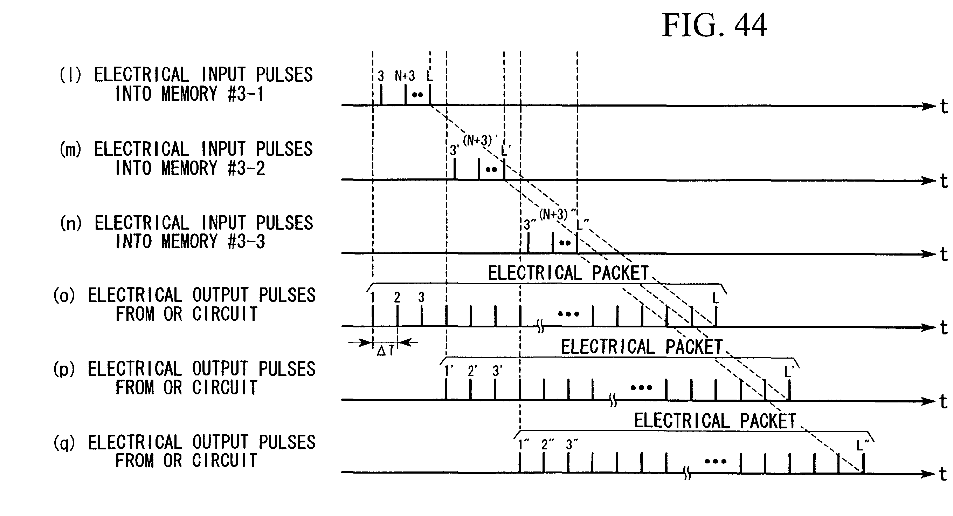

Figure 43 and 44 show timing charts for pulse trains at each port in the optical packet decompression circuit shown in Figure 41. Pulse trains (a)~(q) in Figure 43 and 44 correspond, respectively, to lines (a)~(q) shown in Figure 41. Each optical pulse in the ultra-highspeed optical pulse train (a) in Figure 43 is assigned to the photo detector 3103, and is converted to electrical signals, and produce electrical pulse trains (b)~(e) at the timing shown, which are assigned by respective switches 3105 to respective memories 3106 for each packet, and are stored temporarily as electrical pulse trains (f)-(n). The train signals are successively read out pulse by pulse from the electrical memory 3105 according to trigger signals from the read circuit 3107 at $\Delta T$ intervals, and OR circuit 3108 thus generates packets comprised by electrical pulse trains as indicated by pulse trains (o), (p), (q), whose time intervals have been extended from $\Delta t$ to $\Delta T$.

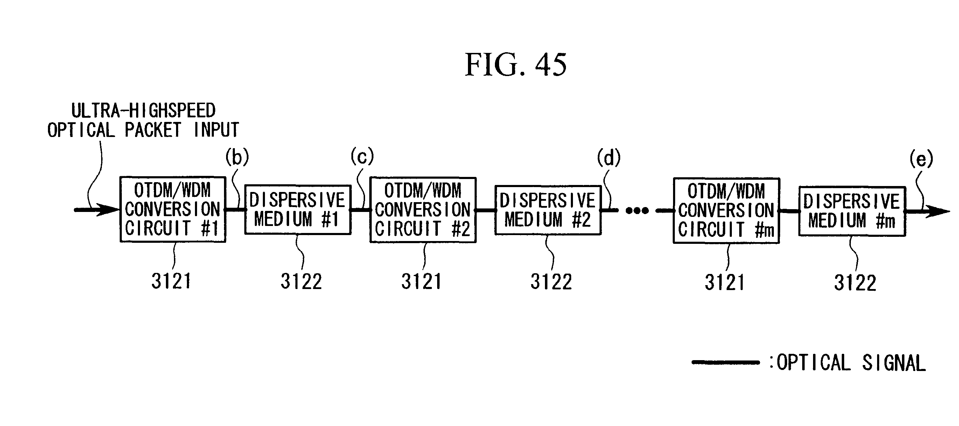

Figure 45 shows a block diagram of the configuration of another embodiment of the packet decompression circuit. As shown in Figure 45, this packet decompression circuit is comprised by connecting the following partial circuit in m-stages (m indicates the number of stages). Each partial circuit is comprised by an OTDM/WDM conversion circuit 3121 for converting pulses into optical signals of different wavelengths for each group containing a specific number of pulses, and a dispersive medium 3122 for providing different delays depending on the wavelengths. Input optical signals are converted to different wavelengths for each group of a specific number of pulses by the OTDM/WDM conversion circuit 3121, and are delayed by different amounts in the dispersive medium 3122 according to the wavelengths. By repeating this process in m-stages, pulse time intervals in the whole packet are expanded and the expanded packets are output.

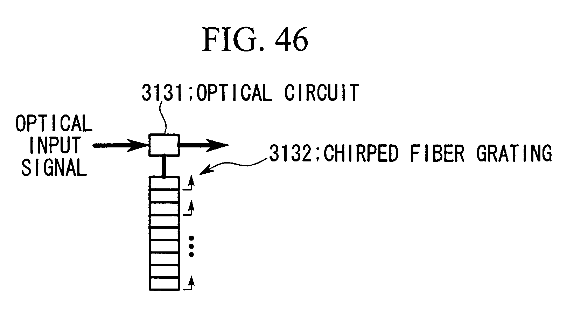

Figure 46 shows an embodiment of the dispersive medium shown in Figure 45. This dispersive medium is comprised by an optical circuit 3131 and a CFG (chirped fiber grating) 3132 that reflects light at different locations according to the wavelengths, and optical signals input as different wavelengths for each specific number of pulses pass through the optical circuit 3131 and are injected into the CFG 3132. Because the reflection locations are different for different wavelengths, the transmission path length varies depending on the wavelengths. Therefore, vacant time intervals are created between different wavelengths when the optical signals emitted from the CFG 3132 reach a point of entering the next stage of the optical circuit 3131.

According to this method, even if the wavelength of the input optical pulse after the conversion in the OTDM/WDM conversion circuit 3121 drifts due to a shift in the bit phase synchronization, it only causes a drift in the time position of the decompressed packet so that precise bit phase synchronization is not required.

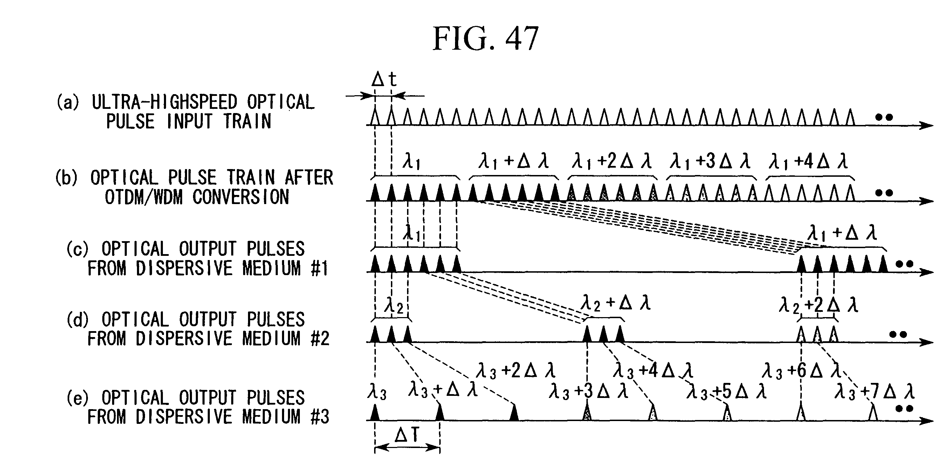

Figure 47 shows a timing chart for the pulse train in each port of the optical packet decompression circuit shown in Figure 45. Pulse trains (a)~(e) in Figure 47 correspond, respectively, to lines (a)~(e) in Figure 45. As shown by pulse train (a) in Figure 47, the optical pulse trains input at $\Delta t$ intervals are converted by the stage-1 OTDM/WDM conversion circuit 3121, in groups of several pulses, into different wavelengths $\lambda_1$, $\lambda_1+\Delta\lambda$, $\lambda_1+2\Delta\lambda$, ... as shown by pulse train (b). Pulse train (b) is input in stage-1 dispersive medium 3122, and after emission from the stage, timing is shifted as shown in pulse train (c) according to the wavelengths. In other words, in this example, delay of wavelength ($\lambda_1+\Delta\lambda$) in the dispersive medium 3122 is larger than that in wavelength $\lambda_1$ so that, in Figure 46, reflection location is farther in the CFG 3132 to give a longer transmission path so that the signals are output later by the delayed amount. In stage-2 of the OTDM/WDM conversion circuit 3121, a plurality of pulses of wavelength $\lambda_1$ are converted, in groups of several pulses, into a wavelength $\lambda_2$, $\lambda_2+\Delta\lambda$, ... and so on. Then, signals of wavelength $\lambda_2+\Delta\lambda$, $\lambda_2+2\Delta\lambda$ are delayed in stage-2 dispersive medium 3122 to give pulse timing shown in (d). In the following sequences, pulse timing is shifted in steps to stage-m and the pulses are output ultimately one pulse at a time, with time interval $\Delta T$ as shown in (e). The time interval $\Delta T$ is determined by the amount of delay produced in the dispersive medium 3122 according to respective wavelengths. The time interval $\Delta T$ in Figure 45 is determined by the grid spacing of the CFG 3132.

Also, in the optical packet decompression circuit shown in Figure 45, a multi-stage configuration was adopted by considering the bandwidths that can be secured by OTDM/WDM conversion in relation to the number of pulses to be decompressed, but a single-stage configuration is also permissible, in which a wideband OTDM/WDM conversion circuit is used to convert optical pulses in different optical packets to different wavelengths in one-stage circuit in conjunction with a dispersive medium that is effective over the entire wideband to decompress one pulse at a time.

As explained in various embodiments above, the optical compression circuit of the present invention enables to control the amount of delay easily and produces less bit fluctuation, compared with the conventional technology, and temperature changes has a lesser effect on its performance so that the present technology enables to increase the bit rates from those in the electrical region (currently 40 Gbps) to those in the optical region to produce over 100 Gbps bit rates with high precision. Also, because ultra-highspeed optical packets can be produced continuously, compared with the conventional technology, the throughput in the present system can be increased N-fold for one optical packet compression circuit operating at a compression ratio of N.

Also, conventional optical packet decompression circuit must have bit phase synchronization and ultra-highspeed switching, but the currently available highspeed optical packet switches can only operate at around several hundred ps at best so that decompression can only be performed for optical packets of bit rates of less than 10 Gbps, and it has been difficult to decompress, in the electrical region, pulse spacing of ultra-highspeed optical packets propagating at bit rates in excess of 100 Gbps. However, as explained in various embodiments above, the present optical packet decompression circuit enables to decompress ultra-highspeed optical packets propagating at bit rates in excess of 100 Gbps, without the need for ultra-highspeed switching or bit phase synchronization, and enables to decompress continuous optical packets so that the throughput in the present system can be increased N-fold for one optical packet compression circuit operating at a compression ratio of N.

In the various embodiments described above, the examples were related to WAN for communication between nodes apparatuses, but a similar technology can be applied to communication between interconnecting components within a single apparatus. By so doing, it is possible to provide benefits such that not only the signals can be transmitted at ultra-highspeed within the single apparatus, but when a fault is developed in the signal line, it is possible to localize the effects of the damage so as not to lead to malfunction in the entire apparatus.

The present invention has been explained above with reference to the drawings associated with various embodiments, but applicable structures are not limited to those shown in the embodiments, and include a range of designs that do not departing from the essence of the present invention.

## Claims

**1.** An ultra-highspeed optical packet transfer ring network comprised by connecting optical add/drop multiplex type node apparatuses (1-1, 1-2, 1-3, 1-4) in a ring network for optical packets to be added to, dropped from or passed through said ring network by means of an optical fiber transmission path (2), wherein a packet transfer control section is provided in each optical add/drop multiplex type node apparatus to manage a flow of incoming packets arriving through the optical fiber transmission path so that an optical packet not addressed to itself is allowed to pass through as an optical packet, and an optical packet addressed to its own node apparatus is dropped for further processing.

**2.** An ultra-highspeed optical packet transfer ring network according to claim 1, wherein

said optical add/drop multiplex type node apparatus, when adding an optical packet to the optical fiber transmission path, prepares a label signal containing information on an address of a destination node apparatus or a routing path to the destination node apparatus, and forwards the optical packet together with the label signal by means of wavelength multiplexing or polarization multiplexing; and

said packet transfer control section acquires an address of a destination node apparatus and routing information of a corresponding optical packet by accessing all the label signals arriving from the optical fiber transmission path by means of wavelength separating or polarization separating.

**3.** An ultra-highspeed optical packet transfer ring network according to claim 2, wherein said optical add/drop multiplex type node apparatus outputs a label signal to the optical fiber transmission path so as to precede a corresponding optical packet by a specific time interval.

**4.** An ultra-highspeed optical packet transfer ring network according to one of claim 2 or 3, wherein at least one of the optical add/drop multiplex type node apparatuses outputs, at given intervals, a label signal to authorize one designated optical node apparatus having a specified address, to add optical packets to the optical fiber transmission path, and any optical node apparatus other than said one designated optical node apparatus receiving said label signal is forbidden to add optical packets to the corresponding slot.

**5.** An ultra-highspeed optical packet transfer ring network according to one of claim 1 to 4, wherein at least one of the optical add/drop multiplex type node apparatuses has a packet compression circuit to compress packets at a compression ratio N, a packet decompression circuit to decompress packets at a packet decompression ratio N and M pieces of optical-to-electrical conversion sections; and

each of the optical add/drop multiplex type node apparatuses controls adding of optical packet to the optical fiber transmission path so as not to output more than two optical packets addressed to a common address in any contiguous N/M number of slots.

**6.** An ultra-highspeed optical packet transfer ring network according to claim 2, wherein each of the optical add/drop multiplex type node apparatuses receives and sends label signals in a bit-synchronous mode.

**7.** An ultra-highspeed optical packet transfer ring network according to claim 6, wherein unmeaning bits are inserted between label signals.

**8.** An optical add/drop multiplex type node apparatus for optical packets to be dropped from, added to or cut-through an optical fiber transmission path disposed in a ring network, comprising:

a send packet terminating section (11) for temporarily accumulating packets input from a user side, converting packets to optical packets and outputting, and preparing a label signal containing an address of a destination node apparatus to correspond to a send-packet or routing information to the destination node apparatus;
an optical circuit section (14) for separating an optical signal input from the optical fiber transmission path to obtain a separated optical packet and an optical label signal, as well as for switching between a bar-state and a cross-state, so that, in the bar-state, two groups of optical packets consisting of said separated optical packet input from the optical fiber transmission path and an optical packet output from the send packet terminating section (11) are received, and said separated optical packet is cut-through without any change to the optical fiber transmission path, while in the cross-state, said separated optical packet input from the optical fiber path side is dropped and output, and said send-optical packet from the send packet terminating section (11) is added to the optical fiber transmission path, and further, an optical add-label signal received is wavelength multiplexed or polarization multiplexed with either an optical pass-packet or an optical add-packet, and sent through to the optical fiber transmission path;
a packet send/receive control section (12) for determining, according to an optical label signal retrieved by the optical circuit section (14), whether there is a corresponding optical packet, and controlling packet transmission in such a way that: (a) if an optical packet is addressed to its own node apparatus or a pass-packet is not present and packets are accumulated in the send packet terminating section (11), a drive signal is output to maintain the optical circuit section (14) in the cross-state, and when packets are accumulated in the send packet terminating section (11), an optical packet send command signal is output to the send packet terminating section (11) and, at the same time, an optical label signal for a corresponding optical packet to be added to or cut-through the optical fiber transmission path is output at given intervals to the optical circuit section (14); and (b) if an optical packet input from the optical fiber side is not addressed to its own node apparatus, a drive signal is output to the optical control section (14) to maintain the bar-state, and an optical label signal relating to an optical pass-packet is output to the optical control section (14); and
a receive packet terminating section (13) for optical-electrical converting an optical packet separated from the optical fiber path side and addressed to its own node apparatus, and, by accessing a destination user address or routing information to a destination node apparatus included in the packet information obtained by conversion, restoring the optical packet to a state before editing and outputting the restored packet to a specific output port.

**9.** An optical add/drop multiplex type node apparatus according to claim 8, wherein said send packet terminating section (11) is comprised by:

not less than one terminating sections (111) for terminating packets input from a user side according to a relevant interface;
a packet editing sending circuit section (112) for receiving output signals from the terminating section (111) and editing a plurality of packets addressed to node apparatuses having a common destination address into one packet and accumulating edited packets, and, in response to trigger signals from the packet send/receive control section (12), outputting an edited packets and preparing label signals relating to respective packets and containing addresses of senders and destination node apparatuses or routing information between the sender node apparatuses and the destination node apparatuses, and outputting label signals to the packet send/receive control section (12);
a first electrical/optical conversion section (1132) for converting a packet output from the packet receiving editing circuit section (112) to an optical packet having a packet wavelength λP; and
a packet multiplexing section (114) for multiplexing optical packets output from the first electrical/optical conversion section (1132); and said optical circuit section (14) is comprised by:

an optical label separation section (142) having an input port for connecting to an input optical fiber of the optical fiber transmission path into the optical node apparatus;
an optical label multiplexing section (143) having an output port for connecting to an output optical fiber of the optical fiber transmission path from the optical node apparatus;
a 2x2 optical switch (141) operated by drive signals output from the packet send/receive control section (12), and having two input ports, one for receiving an input signal having a packet wavelength λP output from the optical label separation section (142) and another for receiving an output signal from the packet multiplexing section (114), and two output ports, one for outputting an optical packet having a packet wavelength λP to the optical label multiplexing section (143) and another for outputting an optical packet addressed to its own node apparatus to the receive packet terminating section (13); and

said packet send/receive control section (12) is comprised by:

an optical label optical-electrical conversion section (122) for receiving optical label signals having a label wavelength λL output from the optical circuit section (14) and performing optical-electrical conversion;
a packet control circuit section (121) for receiving label signals output from the label optical-electrical conversion section (122) on the optical fiber path side and label signals from the send packet terminating section (11), and controlling packet transmission in such a way that: (a) if an optical packet is addressed to its own node apparatus or a pass-packet is not present and packets are accumulated in the send packet terminating section (11), a drive signal is output to maintain the 2x2 optical switch (141) of the optical circuit section (14) in the cross-state, and when there are accumulated packets in the send packet terminating section (11), an optical packet send command signal is output to the send packet terminating section (11) and, at the same time, an optical label signal relating to an optical packet to be added to or cut- through the optical fiber transmission path is output at given intervals to the optical circuit section (14); and (b) if an optical packet input from the optical fiber transmission side is not addressed to its own node apparatus, a drive signal is output to the 2x2 optical switch (141) of the optical control section (14) to maintain the bar-state and an optical label signal relating to an optical pass-packet is output to the optical control section (14); and
a second electrical-optical conversion section (123) for converting a label output signal from the packet control circuit section (121) to an optical label signal having a label wavelength λL and outputting as a label wavelength input signal to the optical label multiplexing section (143); and said receive packet terminating section (13) is comprised by:

a packet optical-electrical conversion section (1322) for receiving and performing optical-electrical conversion on an optical packet, separated from the optical circuit section (14) and having a packet wavelength λP; and
a packet receiving editing circuit section (133) for re-editing an edited packet to revert to a packet before editing according to a packet output from the packet optical-electrical conversion section (1322) by accessing a destination user address contained in the packet information, and sending to a specific output port.

**10.** An optical add/drop multiplex type node apparatus according to one of claim 8 or 9, wherein provided are:

an optical packet compression circuit disposed between the send packet terminating section (11) and the optical circuit (14) for shortening an optical packet duration by narrowing a time interval between optical pulses; and
an optical decompression circuit section disposed between the optical circuit (14) and the receive packet terminating section (13) for reverting an optical packet duration to a pre-compression level.

**11.** A method for operating an optical add/drop multiplex type node apparatus disposed in an optical fiber transmission path arranged in a ring for an optical packet to be added to, dropped from or cut-through the optical fiber transmission path, comprising:

a step of separating and accessing an optical label signal from an optical signal input from the optical fiber transmission path to generate a separated optical label;
a step of label discriminating for determining, according to the optical label signal separated in the separating step, whether there is a corresponding optical packet and its destination address;
an optical packet sending step for converting a packet input from the user side to an optical packet and outputting the optical packet, when an optical packet in the optical fiber path side is addressed to its own node apparatus or when there is no optical pass-packet, according to a result of the label discriminating step;
an optical switch driving step for outputting a drive signal to the optical fiber transmission path, after a standby interval, to switch the optical switch in such a way that routing through the optical fiber transmission path for packet adding, dropping and passed-through would be different, depending on, as a result of the label discriminating step, whether an optical packet on the optical fiber path side is addressed to its own node apparatus, or there is no optical pass-packet and packets addressed to its own node apparatus are accumulated, or when an optical packet on the optical fiber path side is not addressed to its own node apparatus;
a label re-preparation step for preparing a new optical label when, as a result of the label discriminating step, the optical packet from the optical fiber transmission side is not addressed to its own node apparatus;
an optical label sending step for sending the optical label re-prepared in the label re-preparation step to the optical fiber transmission path through the optical switch;
a delaying step for delaying an optical packet arriving a specific time later than said separated optical label; and
an emitting step for outputting without any changes the optical packet that arrives after the delaying step to the optical fiber transmission path through the optical switch.

**12.** A method for protecting a label switched network for transferring packets between nodes according to address data included in label information, wherein a path code is attached to a frame of the label information to detect or correct errors in a transmission system so as to enable the nodes to monitor a line quality of the transmission system by monitoring the label information.

**13.** A method for protecting a label switched network according to claim12, wherein

said label switched network is an optical packet transfer network for transferring packets as optical packets; and
in said optical packet transfer network, an optical packet is multiplexed with label information and transferred; and
said node extracts multiplexed label information only, and monitoring is performed by converting extracted label information to an electrical signal.

**14.** A method for protecting a label switched network according to one of claim12 or 13, wherein said label switched network is a 2-fiber 1:1 uni-directional type ring network and has a working path and a protection path as transmission paths, in which signals propagate uni-directionally but opposite to each other in the working path and the protection path so that,

during normal operation, packets are directed only to the working path and each node monitors label information in the working path, and when an abnormal state is detected by a monitor, an abnormality report is issued to upper nodes in the working path by using one of either the working path, the protection path or an operational network; and
upon receiving an abnormality report, upper nodes divert packets to the protection path.

**15.** A node apparatus for transferring optical packets to be dropped from, added to or cut-through a ring network comprised by connecting a plurality of said node apparatuses in a ring shaped optical fiber transmission path, wherein said node apparatus has a working path and a protection path; and
said working path is provided with:

an optical label extraction circuit section for extracting a label signal that contains at least address information relating to an optical packet in the optical fiber transmission path;
an optical label attaching circuit section for attaching a pass-label signal for an optical packet to be passed through its own node and attaching an add-label signal for an optical packet to be added from its own node to the optical fiber transmission path;
an optical switch for switching optical packets so as to drop an optical packet arriving in the optical fiber path side when the optical packet is addressed to its own node, or to add an optical packet from its own node to the optical fiber transmission path, or to cut-through an optical packet arriving in the optical fiber transmission path side that is not addressed to its own node;
a label receiving circuit section for receiving label signals extracted by the optical label extraction circuit section;
a monitor for monitoring a transmission code included in a received label signal, and issuing a trigger signal to report an abnormal state when detected;
a control circuit section for issuing a packet send command signal to add an optical packet to the optical fiber transmission path by matching timing according to a label signal received, and receiving trigger signals issued by the monitor;
not less than one terminating section for packetizing data input from the user side according to a relevant interface;
a packet editing sending circuit section for editing a plurality of packets addressed to node apparatuses having a common destination address into one packet and accumulating edited packets, and outputting a label signal containing at least node information on a destination node of a packet or routing information to the control circuit section;
not less than one packet sending circuit section for adding a packet sent from the packet editing sending circuit section to the optical fiber transmission path according to a packet send command issued from the control circuit section;
not less than one packet receiving circuit section for receiving optical packets addressed to its own node and dropped from the optical fiber transmission path;
a packet editing receiving circuit section for editing a packet received from the packet receiving circuit section into original pre-edited packets and accumulating original packets and transferring to user destinations;
according to user side interface, and

said protection path is provided with:

an optical label extraction section for extracting a label signal;
an optical switch for switching optical packets so as to drop an optical packet arriving in the optical fiber transmission path side when the optical packet is addressed to its own node, or to cut-through an optical packet arriving in the optical fiber transmission path side that is not addressed to its own node;
an optical label receiving section for receiving label signals extracted by the optical label extraction circuit section;
a monitor for monitoring a transmission code included in a received label signal, and issuing a trigger signal to report an abnormal state when detected;
a control circuit section for receiving information contained in received label signals and trigger signals issued by the monitor;
not less than one packet receiving circuit section for receiving optical packets addressed to its own node apparatus and dropped from the optical fiber transmission path;
a packet editing receiving circuit section for separating a packet received from the packet receiving circuit section into original pre-edited packets and accumulating original packets and transferring to user destinations; and

the node apparatus is further provided with:

a second optical switch controlled by the control circuit section to pass a packet through without any change to the working path of the optical fiber transmission path or to switch to the protection path of the optical fiber transmission path by reversing the direction of transmission; and
an input buffer provided in front of an input section of the second optical switch for connecting to the protection path of the optical fiber transmission path.

**16.** A method for protecting a label switched network according to one of claim12 or 13, wherein

said label switched network is a 2-fiber 1+1 ring network and has a working path and a protection path as transmission paths, in which signals propagate uni-directionally either in one direction or in opposite directions in the working path and the protection path according to destination node addresses so that,
during normal operation, packets are directed to both the working path and the protection path, and a receiving terminal of a node receives packets from the working path and the label information is monitored by nodes; and
upon detecting an abnormal state in label information by monitoring in the working path, the receiving terminal is switched to the protection path to receive packets.

**17.** A node apparatus for performing the method according to claim 16 by transferring optical packets to be dropped from, added to or cut-through a ring network comprised by connecting a plurality of said node apparatuses in a ring shaped optical fiber transmission path, wherein said node apparatus has a working path and a protection path; and each of said working path and said protection path is provided with:

an optical label extraction circuit section for extracting a label signal that contains at least address information relating to an optical packet in the optical fiber transmission path;
an optical label attaching circuit section for attaching a pass-label signal for an optical packet to be cut-through its own node and attaching an add-label signal for an optical packet to be added from its own node to the optical fiber transmission path;
an optical switch for switching optical packets so as to drop an optical packet in the optical fiber transmission path side addressed to its own node, or to add an optical packet from its own node to the optical fiber transmission path, or to cut-through an optical packet in the optical fiber transmission path side not addressed to its own node;
a label receiving circuit section for receiving label signals extracted by the optical label extraction circuit section;
a monitor for monitoring a path code included in a received label signal, and issuing a trigger signal to report an abnormal state when detected;
a control circuit section for issuing a packet send command signal to add an optical packet to the optical fiber transmission path by matching timing according to a label signal received, and receiving trigger signals issued by the monitor;

a packet editing sending circuit section for editing a plurality of packets addressed to node apparatuses having a common destination address into one packet and accumulating edited packets, and outputting a label signal containing at least node information on a destination node of a packet or routing information to the control circuit section;

not less than one packet sending circuit section for adding a packet sent from the packet editing sending circuit section to the optical fiber transmission path according to a packet send command issued from the control circuit section;

not less than one packet receiving circuit section for receiving optical packets addressed to its own node and dropped from the optical fiber transmission path;

a packet editing receiving circuit section for editing a packet received from the packet receiving circuit section into original pre-edited packets and accumulating original packets and transferring to user destinations;

and is further provided with:

not less than one terminating section for terminating data input from the user side and packetizing according to respective interfaces; and

a bridge/selector for sending packets sent from the terminating section to both the working path and the protection path during normal operation, and, during ring cut, sending packets sent from the terminating section by selecting either the working path or the protection path; and

a selector for transferring packets edited and accumulated by the packet editing receiving circuit section through either the working path or the protection path to users.

**18.** A method according to one of claim 12 or 13 for protecting a label switched network, wherein said label switched network is a 2-fiber 1+1 ring network and has a working path and a protection path in the optical fiber transmission path, in which signals propagate uni-directionally, and

during normal operation, said node sends packets through the working path and the protection path, and a receiving terminal of the node receives packets from both the working path and the protection path and compares and records packets received from both paths, and the label information is monitored by nodes; and

when an abnormal state is detected by monitoring, the node switches the receiving terminal between the working path or the protection path for each packet.

**19.** A node apparatus according to claim 17 for performing the method according to claim 18 by having a packet comparison section for comparing and recording packets received in the packet editing receiving circuit section provided in the working path and the protection path.

**20.** A method according to one of claim 12 or 13, wherein

said label switched network is a 4-fiber 1:1 bidirectional label switched ring network, and has a working path and the protection path in the optical fiber transmission path, in which signals propagate in two opposing directions according to destination addresses of packets, and

during normal operation, the node sends packets to the working path and the label information for the working path is monitored by nodes, and when an abnormal state is detected, the node diverts a packet addressed to a node that is not accessible because of the abnormal state through the protection path.

**21.** A node apparatus for performing the method according to claim 20 by transferring optical packets to be dropped from, added to or cut-through a ring network comprised by connecting a plurality of said node apparatuses in a ring shaped optical fiber transmission path, wherein

said node apparatus has a working path and a protection path which are bi-directional, and

said working path is provided with:

an optical label extraction circuit section for extracting a label signal that contains at least address information relating to an optical packet in the optical fiber transmission path;

an optical label attaching circuit section for attaching a pass-label signal for an optical packet to be passed through its own node and attaching an add-label signal for an optical packet to be added from its own node to the optical fiber transmission path;

an optical switch for switching optical packets so as to drop an optical packet in the optical fiber transmission path side when the optical packet is addressed to its own node, or to add an optical packet from its own node to the optical fiber transmission path, or to cut-through an optical packet in the optical fiber transmission path side that is not addressed to its own node;
a label receiving circuit section for receiving a label signal extracted by the optical label extraction circuit section;
a monitor for monitoring a path code included in a received label signal, and issuing a trigger signal to report an abnormal state when detected;
a control circuit section for issuing a packet send command signal to add an optical packet to the optical fiber transmission path by matching timing according to a label signal received, and receiving trigger signals issued by the monitor;
not less than one terminating section for packetizing data input from the user side according to a relevant interface;
a packet editing sending circuit section for editing a plurality of packets addressed to node apparatuses having a common destination address into one packet and accumulating edited packets, and outputting a label signal containing at least node information on a destination node of a packet or routing information to the control circuit section;
not less than one packet sending circuit section for adding a packet sent from the packet editing sending circuit section to the optical fiber transmission path according to a packet send command issued from the control circuit section;
not less than one packet receiving circuit section for receiving optical packets addressed to its own node and dropped from the optical fiber transmission path;
a packet editing receiving circuit section for editing a packet received from the packet receiving circuit section into original pre-edited packets and accumulating original packets and transferring to user destinations; and said protection path is provided with:

an optical label extraction section for extracting a label signal;
an optical switch for switching optical packets so as to drop an optical packet in the optical fiber transmission path side when the optical packet is addressed to its own node, or to add an optical packet from its own node to the optical fiber transmission path, or to cut-through an optical packet in the optical fiber path side that is not addressed to its own node;
an optical label receiving section for receiving label signals extracted by the optical label extraction circuit section;
a monitor for monitoring a path code included in a received label signal, and issuing a trigger signal to report an abnormal state when detected;
a control circuit section for receiving information contained in a received label signal and receiving trigger signals issued by the monitor;
not less than one packet receiving circuit section for receiving optical packets addressed to its own node apparatus and dropped from the optical fiber transmission path;
a packet editing receiving circuit section for separating a packet received from the packet receiving circuit section into original pre-edited packets and accumulating original packets and transferring to user destinations; and
for each pair of paths comprised by the working path and the protection path that are bi-directional and opposing, said node apparatus is further provided with:

a second optical switch controlled by the control circuit section to pass a packet through without any change to the working path of the optical fiber transmission path or to switch to the protection path of the optical fiber transmission path by reversing the direction of transmission; and
an input buffer provided in front of an input section of the second optical switch for connecting to the protection path of the optical fiber transmission path.

**22.** A method for protecting a label switched network according to one of claim12 or 13, wherein

said label switched network is a 4-fiber 1+1 ring network and has a working path and a protection path as transmission paths, in which signals propagate bi-directionally either in one direction or in opposite directions in the working path and the protection path according to destination node addresses so that,
during normal operation, packets are directed to both the working path and the protection path, and a receiving terminal of a node receives packets from the working path and the label information is monitored by nodes; and
upon detecting an abnormal state in label information in the working path by monitoring, the receiving terminal is switched to the protection path for receiving packets;
when an abnormal state is detected by monitoring in both the working path and the protection path, if the transfer direction in the working path is opposite to that in the protection path, the receiving terminal is switched to the protection path and a location of abnormality is notified to other nodes, and if the transfer direction in the working path is the same as that in the protection path, a node adjacent to an abnormal location drops all packets in the working path and the protection path temporarily, and the packets are transferred in respective opposite directions of the optical fiber transmission path to prevent loss of packets and a location of abnormality is notified to other nodes, and

upon receiving a note specifying a location of abnormality from the node adjacent to the location of abnormality, each node determines a direction of sending packets so as to avoid the abnormal location.

**23.** A node apparatus for performing the method according to claim 22, by transferring optical packets to be dropped from, added to or cut-through a ring network comprised by connecting a plurality of said node apparatuses in a ring shaped optical fiber transmission path, wherein

said node apparatus has a working path and a protection path; and

each of said working path and said protection path is provided with:

an optical label extraction circuit section for extracting a label signal that contains at least address information relating to an optical packet in the optical fiber transmission path;

an optical label attaching circuit section for attaching a pass-label signal for an optical packet to be passed through its own node and attaching an add-label signal for an optical packet to be added from its own node to the optical fiber transmission path;

an optical switch for switching optical packets so as to drop an optical packet in the optical fiber transmission path side when the optical packet is addressed to its own node, or to add an optical packet from its own node to the optical fiber transmission path, or to cut-through an optical packet in the optical fiber transmission path side that is not addressed to its own node;

a label receiving circuit section for receiving label signals extracted by the optical label extraction circuit section;

a monitor for monitoring a path code included in a received label signal, and issuing a trigger signal to report an abnormal state when detected;

a control circuit section for issuing a packet send command signal to add an optical packet to the optical fiber transmission path by matching timing according to a label signal received, and receiving trigger signals issued by the monitor;

a packet editing sending circuit section for editing a plurality of packets addressed to node apparatuses having a common destination address into one packet and accumulating edited packets, and outputting a label signal containing at least node information on a destination node of a packet or routing information to the control circuit section;

not less than one packet sending circuit section for adding a packet sent from the packet editing sending circuit section to the optical fiber transmission path according to a packet send command issued from the control circuit section;

not less than one packet receiving circuit section for receiving optical packets addressed to its own node and dropped from the optical fiber transmission path;

a packet editing receiving circuit section for editing a packet received from the packet receiving circuit section into original pre-edited packets and accumulating original packets and transferring to user destinations;

and is further provided with the optical label extraction circuit section, the optical label attaching circuit section, the optical switch, the label receiving circuit section, the monitor, the packet sending circuit section and the packet receiving circuit section, for use in both directions of packet transfer; and further,

not less than one terminating section for terminating data input from the user side and packetizing according to respective interfaces; and

a bridge/selector for sending packets sent from the terminating section to both the working path and the protection path during normal operation, and, during ring cut, sending packets sent from the terminating section by selecting either the working path or the protection path; and

a selector for transferring packets edited and accumulated by the packet editing receiving circuit section through either the working path or the protection path to users.

**24.** A method for protecting a label switched network of a 4-fiber 1+1 bi-directional type according to claim 22, wherein said node receives a packet from the working path and the protection path, and compares and records each packet, and the label signals are monitored by the node; and

when an abnormal state is detected by monitoring, the node switches the receiving terminal between the working path or the protection path for each packet.

**25.** A node apparatus according to claim 23 for performing the method for protecting a packet switching network recited in claim 24, wherein

said node apparatus has a packet comparison circuit section for comparing and recording packets dropped from the working path and the protection path; and
said selector determines for each packet whether to select the working path or the protection path according to a trigger signal output from the packet comparison circuit section.

**26.** A method for protecting an ultra-highspeed packet transfer ring network according to claim 1, wherein said ultra-highspeed packet transfer ring network

is a label switched network for transferring packets between nodes according to address information included in label information of each packet; and
monitors line quality of transmission paths by attaching a path code for detecting or correcting errors in transmission system to each frame of the label information for the node to monitor the label information.

**27.** An add/drop multiplex type node apparatus according to claim 8, wherein a line quality of a transmission path is monitored by attaching a transmission code for detecting or correcting errors in transmission system to each frame of the label information for the node to monitor the label information.

**28.** A method for identifying a fault location of an optical switch disposed in an optical fiber transmission path formed by connecting add/drop multiplex type node apparatuses in a ring network for optical packets to be added to, or dropped from, or passed through the ring network, wherein at least one of the optical add/drop multiplex type node apparatuses is a master node apparatus that outputs, at given intervals, a label signal indicating only a designated optical node apparatus, having a specified address, is allowed to add optical packets to the optical fiber transmission path, and an optical node apparatus receiving the label signal recognizes according to the label that only said designated optical node apparatus as a dispatch node apparatus is allowed to add optical packets, wherein

said master node apparatus outputs a pilot packet as a specific data train; and
an add/drop multiplex type node apparatus receiving the pilot packet determines whether or not data have been received correctly by examining whether the received pilot packet represents the specific data train, and a normal/abnormal report is issued to the master node apparatus, and
the master node apparatus determines which optical switch in the ring network is faulty according to the normal/abnormal report received.

**29.** A node apparatus, for transferring optical packets to be dropped from, added to or cut-through a ring network comprised by connecting a plurality of said node apparatuses in a ring shaped optical fiber transmission path, wherein

said node apparatus has a working path and a protection path; and
each of said working path and said protection path is provided with:

an optical label extraction circuit section for extracting a label signal that contains at least address information relating to said optical packet in the optical fiber transmission path;
a monitor for monitoring extracted label signals and, if an abnormal state is found by monitoring, generating a trigger signal to notify that abnormality exists;
a control circuit section for discriminating whether an optical packet relating to an extracted label signal is to be dropped or passed through its own node apparatus according to the extracted label signal;
an optical label attaching circuit section for sending to the optical fiber transmission path a pass-label signal for an optical packet to be cut-through its own node, according to a result of discrimination by the control circuit section;
an optical switch for switching a path for optical packets according to a result of discrimination by the control circuit section;
a packet receiving circuit section for receiving optical packets dropped into its own node apparatus by way of the optical switch; and further,
in the working path, a sending circuit section is provided to send an optical packet input from the user side to the optical fiber transmission path through the optical switch, and the control circuit section switches the optical switch at same intervals as the optical packets sent through the sending circuit section; and
the control circuit section switches between the working path and the protection path according to a trigger signal issued by a monitor circuit section.

**30.** A node apparatus according to claim 29, wherein said node apparatus is a 1+1 type node apparatus that adds a same packet to both the working path and the protection path
during normal operation, and the protection path has a sending circuit section for sending data input from the user side as optical packets to the optical fiber transmission path, and the control circuit section switches the optical switch at a same rate as optical packets output by the sending circuit section.

**31.** A node apparatus according to one of claim 29 or 30, wherein said node apparatus is a 2-fiber unidirectional node apparatus having one working path and one protection path in the optical fiber transmission path, and optical packets are transferred in one direction regardless of destination node apparatuses.

**32.** A node apparatus according to one of claim 29 or 30, wherein said node apparatus is a 4-fiber bi-directional node apparatus having two working paths and two protection paths in the optical fiber transmission path so that optical packets are sent in opposite directions and a direction of transfer is determined according to addresses of destination node apparatuses.

**33.** An optical packet compression circuit comprising:

an optical pulse generation section (3001, 3002) for generating optical pulses at $\Delta T$ intervals;
an optical divider (3003) for separating optical pulses output from the optical pulse generation section into N pieces of signal lines, where N is a natural number;
a buffering circuit (3010) for temporarily storing serially input data and outputting N parallel trains;
N pieces of modulators (3004), one modulator for each of N signal lines, for modulating optical signals output from the optical divider individually according to N pieces of data output from the buffering circuit;
an optical delay line (3008) provided in a back stage of the modulator in each signal line for delaying output signals of the modulator by an amount equal to a whole multiple of $\Delta t$; and
an optical coupler (3005) for outputting modulated optical pulses so that each optical pulse is shifted by an interval $\Delta t$ by means of the optical delay line.

**34.** An optical packet compression circuit according to claim 33, wherein provided are:

a plurality of input signal lines;
a plurality of buffering circuits (3010) corresponding to each of the input signal lines;
a read control circuit (3019) for outputting read-signals so as to successively read data from the plurality of buffering circuits; and
N pieces of OR circuits (3017) for selecting data so as to drive respective modulators in association with the plurality of buffering circuits.

**35.** An optical packet compression circuit according to claim 34, wherein

said buffering circuit (3010) has a serial/parallel conversion circuit (3011) for converting serial input data into N parallel trains and a memory (3012) for temporarily storing data and outputting the data according to signals from the read control circuit; and
said OR circuit is a logical sum circuit (3017).

**36.** An optical packet compression circuit according to one of claim 34 or 35, wherein said buffering circuits are provided in N pieces so that N-lines of input data trains are compressed and output as one line.

**37.** An optical packet decompression circuit comprising:

an optical serial/parallel conversion circuit (3101) for converting continual input optical pulse signals into N parallel trains of optical pulses, where N is a natural number;
N pieces of photo detectors (3103) for optical/electrical conversion of respective optical pulse signals produced by the serial/parallel conversion circuit;
not less than one start-bit detection circuit (3014) for detecting a start-bit of electrical signals output from the N pieces of photo detectors;
N pieces of switches (3105) for directing electrical signals output from the N pieces of photo detectors to respective buffers;
$N^2$ pieces of memories (3106) for temporarily storing each bit of N pieces of electrical signals directed to N pieces of switches;
a read circuit (3107) for generating a read-signal, when a start-bit is detected by a start-bit detection circuit-1, for each bit of the $N^2$ pieces of memories so that $N^2$ pieces of signals are successively read out from the memories, beginning with a memory corresponding to said start-bit detection circuit-1; and

N pieces of multiplexing circuit sections for multiplexing each group of N data read from the $N^2$ pieces of memories according to a read-signal, and outputting resulting groups of multiplexed signals to output signal lines.

**38.** An optical packet decompression circuit according to claim 37, wherein

said serial/parallel conversion circuit (3101) is comprised by an OTDM/WDM conversion circuit (3111) for converting pulses in continually input optical pulses located at different time positions into different wavelengths, and a waveguide (3112) for separating each wavelength of a multiplexed signal output from the OTDM/WDM conversion circuit into N waves.

**39.** An optical packet decompression circuit comprising:

an OTDM/WDM conversion circuit (3121) for converting pulses in continually input optical pulses located at different time positions into different wavelengths; and

a dispersive medium (3122) for receiving signals from the OTDM/WDM conversion circuit, and generating different values of time delay according to signal wavelengths.

**40.** An optical packet decompression circuit according to claim 39, wherein

said dispersive medium is comprised by a chirped fiber grating (3132) to reflect input light signals at different delay times according to input wavelengths, and an optical circuit (3131) to direct an optical signal output from the OTDM/WDM conversion circuit to the chirped fiber grating and to direct an optical signal reflected from the chirped fiber grating to an output side.

**41.** An optical decompression circuit comprised by connecting decompression circuits, each of which is according to claim 39 or 40, in series, so that

each stage of optical decompression circuit divides an input optical pulse train into a plurality of partial pulse trains so as to result in

an input optical pulse signal being divided in each stage into partial trains of decreasing units by the plurality of stages connected in series.

**42.** An ultra-highspeed optical packet transfer ring network according to claim 1, wherein said add/drop multiplex type node apparatus is provided with an optical compression circuit according to one of claims 33 to 36, and adds optical packets compressed by a respective optical packet compression circuit to the optical fiber transmission path.

**43.** An ultra-highspeed optical packet transfer ring network according to claim 1, wherein said add/drop multiplex type node apparatus is provided with an optical decompression circuit according to one of claims 37 or 38, and decompresses optical packets dropped from the optical fiber transmission path using a respective optical packet decompression circuit.

**44.** An ultra-highspeed optical packet transfer ring network according to claim 1, wherein said add/drop multiplex type node apparatus is provided with an optical decompression circuit according to one of claims 39 to 41, and adds optical packets decompressed using a respective optical packet decompression circuit to the optical fiber transmission path.

FIG. 1

1-1;OPTICAL ADD/DROP MULTIPLEX TYPE NODE APPARATUS
1-2
1-3
1-4
OPTICAL LABEL (WAVELENGTH λL)
OPTICAL PACKET (WAVELENGTH λP)
2;OPTICAL FIBER TRANSMISSION PATH
3-1;COM TERMINAL
3-2;COM TERMINAL

RING NETWORK
λP
14
OPTICAL CIRCUIT SECTION
λP
ADD OPTICAL PACKET (λP)
OPTICAL LABEL λL
DRIVE SIGNAL
OPTICAL LABEL λL
DROP OPTICAL PACKET (λP)
11
SEND PACKET TERMINATING SECTION
PACKET SEND/RECEIVE CONTROL SECTION
12
13
RECEIVE PACKET TERMINATING SECTION
USER SIDE
USER SIDE

FIG. 2

FIG. 3
142;OPTICAL LABEL DEMULTIPLEXING SECTION
11;SEND PACKET TERMINATING SECTION
14;OPTICAL CIRCUIT SECTION
111
1132
1131
114
TERMINATING CIRCUIT SECTION
E/O CONVERSION SECTION
PACKET COMPRESSION CIRCUIT
USER SIDE
PACKET EDITING SENDING SECTION
PACKET MULTIPLEXING SECTION
113;SENDING PACKAGE
112
RING NETWORK
ADD
$\lambda_L$
$\lambda_P$
122
121
141
12 ;PACKET SEND/ RECEIVE CONTROL SECTION
LABEL O/E CONVERSION SECTION
LABEL
2×2 OPTICAL SWITCH
PACKET CONTROL CIRCUIT SECTION
E/O CONVERSION SECTION (2)
123
LABEL ATTACHMENT
134
1322
1321
131
E/O CONVERSION SECTION
PACKET O/E CONVERSION SECTION
PACKET DECOMPRESSION CIRCUIT
DROP
PACKET RECEIVING EDITING CIRCUIT SECTION
PACKET DEMULTIPLEXING SECTION
132;RECEIVING PACKAGE
133
143 ;OPTICAL LABEL MULTIPLEXING SECTION
13;RECEIVE PACKET TERMINATING SECTION

FIG. 4
101a
OPTICAL LABEL ARRIVAL
101b
LABEL DETERMINATION PROCESSING
DETERMINATION FINISH
102b
101c
104b
LABEL PREPARATION PROCESSING
OPTICAL PACKET SEND PROCESSING
102a
103b
RING SIDE OPTICAL PACKET ARRIVAL
OPTICAL PACKET SENDING
STANDBY TIME
MARGIN
102c
105b
ACTIVATE OPTICAL SWITCH
104a
103a
OPTICAL LABEL PREPARATION
OPTICAL PACKET SEND PROCESSING
OPTICAL PACKET PROPAGATION IN DELAY LINE
EMIT OPTICAL PACKET
105a
PACKET SEND/RECEIVE CONTROL SECTION 12
OPTICAL CIRCUIT SECTION 14
SEND PACKET TERMINATING SECTION 11

INPUT FROM RING SIDE
FROM SEND PACKET TERMINATING SECTION
OUTPUT TO RING SIDE
TO RECEIVE PACKET TERMINATING SECTION
BAR STATE

FIG. 5A

INPUT FROM RING SIDE
FROM SEND PACKET TERMINATING SECTION
OUTPUT TO RING SIDE
TO RECEIVE PACKET TERMINATING SECTION
CROSS STATE

FIG. 5B

FIG. 6

| | INPUT PACKET FROM RING SIDE, YES | | INPUT PACKET FROM RING SIDE, NO |
|---|---|---|---|
| | ADDRESSED TO OWN NODE | ADDRESSED TO OTHER NODE | |
| DROP PACKET, YES | CROSS | BAR(INPUT PACKET FROM RING SIDE IS ADDRESSED TO OWN NODE, OR INPUT PACKET IS GONE AND SHIFT TO CROSS) | CROSS |
| DROP PACKET, NO | CROSS | BAR | NOT DEFINED |

# FIG. 7

PACKET SIZE : L bit
PACKET DURATION=L/B s
B bit/s
N×B bit/s
PACKET DURATION=L/B/N s

# FIG. 8

2N
TARGETED ADD SLOT
ADD POSSIBLE/IMPOSSIBLE DETERMINATION
OPTICAL LABEL (λL)
2N/M-1
N/M
RECEIVING ADDRESS MONITOR
PACKET COMPRESSION DELAY AND THE LIKE
OPTICAL PACKET (λP)
ATTACHING DELAY CAUSED BY OTHER FACTORS
: ADD SLOT

FIG. 9

| ITEM | DETAILS | NOTES |
|---|---|---|
| MAXIMUM RING LENGTH S | 500 km | |
| LIGHT SOURCE WAVELENGTH VARIATION | WITHIN 20 GHz | |
| TRANSMISSION FIBER DISPERSION (DISPERSION COMPENSATION, POSSIBLE) | WITHIN 2.4 ps/nm/km | |
| NODE CAPACITY AT START (INCREASE POSSIBLE) | 40 Gbps | |
| RING CAPACITY | 160 Gbps | |
| MAXIMUM PACKET BYTE LENGTH | 1500 bytes | |
| PACKET COMPRESSION RATIO | 4 | |
| GUARD TIME<br>DETAILS;<br>OPTICAL SWITCH SHIFT TIME<br>PACKET WALKOFF<br>LABEL SENDING JITTER<br>MARGIN | 1 ns<br><br>0.1 ns<br>0.1 ns<br>0.1 ns<br>0.7 ns | OVERHEAD OCCUPATION RATE 6 % |
| PREAMBLE TIME | 4 ns | |
| AVERAGE LONGITUDINAL TEMPERATURE VARIATION IN TRANSMISSION FIBER | 50 °C | |

FIG. 10

SIGNAL BIT
RATE 40 Gbps
9
8
7
6
5
4
3
2
1
160[Git/s]
75ns
OPTICAL
GATE
6000
3000
3001
3002
3003
3004
3005
3006
3007
3008
3009
25ps, 4bit
->3000 GROUP
12000bit(1500byte)
15m
bit JITTER CAUSED
BY TEMPERATURE VARIATION
LEADING bit 60m
->60x10^-7=6μm/°C
->0.03ps/°C
ALLOWABLE VARIATION 2 %
->6.25ps×0.02=0.125ps
->WITHIN ABOUT 5°C
OPTICAL AMPLIFIER
(WITH GATING FUNCTION)

# FIG. 11

NODE K
ONLY
NODE K
ONLY
VACANT
PACKET
SLOT
LABEL
(λL)
TIME
PACKET DURATION
DEDICATED PACKET
SENDING INTERVAL

# FIG. 12

PACKET LOSS RATE 10^-12
η=1/160
η=1/100
η=1/40
NUMBER OF NODES THAT CAN
BE ACCOMMODATED
BURSTINESS
70
60
50
40
30
20
10
0
5
10
15
20

FIG. 13

r=0.05
r=0.1
r=0.2
r=0.3
r:TRAFFIC LOAD ON THE USER SIDE
n=20
AVERAGE WAITING TIME [PACKET]
100
10
1
0.1
0
0.2
0.4
0.6
0.8
1
TRAFFIC LOAD ON THE RING SIDE


FIG. 14

r=0.05
r=0.1
r=0.2
r=0.3
r:TRAFFIC LOAD ON THE USER SIDE
n=20
DISPERSION [PACKET]
100
10
1
0
0.2
0.4
0.6
0.8
1
TRAFFIC LOAD ON THE RING SIDE

# FIG. 15

2-FIBER 1:1 UNI-DIRECTIONAL PROTECTION
START
SEND DATA SIGNAL TO WORKING PATH
EACH NODE MONITORS LABEL SIGNAL
DETECT FAULT IN LABEL SIGNAL IN WORKING PATH?
NO
YES
NOTIFY FAULT TO UPSTREAM NODE
UPSTREAM NODE DIVERTS PACKETS FROM WORKING PATH TO PROTECTION PATH
RECOVERY
END

WORKING PATH
PROTECTION PATH
LABEL SWITCHING PATH
NODE

FIG. 16A

NODE 1
NODE 2
NODE 3
NODE 4
NODE 5
NODE 6

2-FIBER 1: 1 UNI-DIRECTIONAL TYPE, NORMAL OPERATION CASE

FIG. 16B

NODE 1
② DIVERT SIGNALS FROM WORKING PATH TO PROTECTION PATH
NODE 2
NODE 3
NODE 4
NODE 5
NODE 6
① NOTIFY WHEN FAULT IS DETECTED

2-FIBER 1: 1 UNI-DIRECTIONAL TYPE FIBER CUT CASE

FIG. 16C

② DIVERT SIGNALS
FROM WORKING PATH
TO PROTECTION PATH
NODE 1
NODE 2
NODE 3
NODE 4
NODE 5
NODE 6
① NOTIFY WHEN
FAULT IS
DETECTED

2-FIBER 1: 1 UNI-DIRECTIONAL TYPE, RING CUT CASE

FIG. 17

TO USER SIDE
2009
E/O
PACKET RECEIVING EDITING CIRCUIT SECTION
2008
CONTROL CIRCUIT SECTION
2005
MONITOR
2004
OPTICAL PACKET RECEIVING SECTION
2007
2006
OPTICAL LABEL RECEIVING CIRCUIT
2003
PROTECTION PATH
DROP
2X2 OPTICAL SWITCH
OPTICAL LABEL EXTRACTION CIRCUIT
2001
2015
WORKING PATH
OPTICAL BUFFER
OPTICAL LABEL ATTACHING CIRCUIT
2002
2014
ADD
OPTICAL PACKET SENDING SECTION
OPTICAL LABEL RECEIVING CIRCUIT
2011
2012
2013
PACKET EDITING SENDING CIRCUIT SECTION
PACKET RECEIVING EDITING CIRCUIT SECTION
END TERMINAL
2010
FROM USER SIDE

# FIG. 18

2-FIBER 1+1 UNI-DIRECTIONAL PROTECTION
START
SEND DATA THROUGH WORKING PATH AND PROTECTION PATH
RECEIVE THROUGH CURRENT PATH
EACH NODE MONITORS LABEL SIGNAL
DETECT FAULT IN LABEL SIGNALS IN WORKING PATH?
NO
YES
FIBER CUT/RING CUT
SWITCH RECEIVING TERMINAL TO PROTECTION PATH
RECOVERY
END

WORKING PATH
NODE
PROTECTION PATH
WORKING-PATH-LABEL SWITCHING PATH
PROTECTION-PATH-LABEL SWITCHING PATH

FIG. 19A

NODE 1
NODE 2
NODE 3
NODE 4
NODE 5
NODE 6

2-FIBER 1+1 UNI-DIRECTIONAL TYPE
(WORKING PATH OPPOSITE TO PROTECTION PATH)
NORMAL OPERATION CASE

FIG. 19B

NODE 1
NODE 2
NODE 3
NODE 4
NODE 5
NODE 6

2-FIBER 1+1 UNI-DIRECTIONAL TYPE
(WORKING PATH OPPOSITE TO PROTECTION PATH)
FIBER CUT CASE

FIG. 19C

NODE 1
NODE 2
NODE 3
NODE 4
NODE 5
NODE 6

2-FIBER 1+1 UNI-DIRECTIONAL TYPE
(WORKING PATH OPPOSITE TO PROTECTION PATH)
RING CUT CASE

WORKING PATH
NODE
PROTECTION PATH
WORKING-PATH-LABEL SWITCHING PATH
PROTECTION-PATH-LABEL SWITCHING PATH

FIG. 20A

NODE 1
NODE 2
NODE 3
NODE 4
NODE 5
NODE 6

2-FIBER 1+1
UNI-DIRECTIONAL TYPE
(SAME DIRECTION FOR WORKING PATH AND PROTECTION PATH)
NORMAL OPERATION CASE

FIG. 20B

NODE 1
NODE 2
NODE 3
NODE 4
NODE 5
NODE 6

2-FIBER 1+1
UNI-DIRECTIONAL TYPE
(SAME DIRECTION FOR WORKING PATH AND PROTECTION PATH)
FIBER CUT CASE

FIG. 21
2001
OPTICAL LABEL EXTRACTION CIRCUIT
2006
2X2 OPTICAL SWITCH
2002
OPTICAL LABEL ATTACHING CIRCUIT
ADD
DROP
2003
OPTICAL LABEL RECEIVING CIRCUIT
OPTICAL LABEL RECEIVING CIRCUIT
2013
OPTICAL PACKET RECEIVING SECTION
OPTICAL PACKET RECEIVING SECTION
2012
2012
OPTICAL PACKET RECEIVING SECTION
OPTICAL PACKET RECEIVING SECTION
2007
MONITOR
2004
CONTROL CIRCUIT SECTION
2005
PACKET EDITING SENDING CIRCUIT SECTION
2011
PACKET RECEIVING EDITING CIRCUIT SECTION
2008
BRD/SEL
BRD/SEL
2022
2022
END TERMINAL
END TERMINAL
2010
2010
FROM USER SIDE
SEL
SEL
2021
2021
E/O
E/O
2009
2009
TO USER SIDE
WORKING PATH
PROTECTION PATH

# FIG. 22

PACKET SWITCHED 2-FIBER 1+1 UNI-DIRECTIONAL TYPE
START
SEND DATA THROUGH WORKING PATH AND PROTECTION PATH
RECEIVE THROUGH CURRENT PATH
COMPARE AND RECORD RECEIVED PACKETS DROPPED FROM RING THROUGH WORKING PATH AND PROTECTION PATH
EACH NODE MONITORS LABEL SIGNAL
DETECT FAULT IN LABEL SIGNALS IN WORKING PATH?
NO
FIBER CUT/RING CUT
YES
SWITCH RECEIVING TERMINAL FOR EACH PACKET FROM WORKING PATH TO PROTECTION PATH
RECOVERY
END

# FIG. 23

2001
OPTICAL LABEL EXTRACTION CIRCUIT
2006
2X2 OPTICAL SWITCH
2002
OPTICAL LABEL ATTACHING CIRCUIT
2023
PACKET COMPARISON CIRCUIT
2003
ADD
DROP
OPTICAL PACKET RECEIVING SECTION
2012
OPTICAL LABEL RECEIVING CIRCUIT
MONITOR
2004
2013
2007
2008
PACKET EDITING SENDING CIRCUIT SECTION
2011
CONTROL CIRCUIT SECTION
2005
PACKET RECEIVING EDITING CIRCUIT SECTION
BRD/SEL
2022
END TERMINAL
2010
FROM USER SIDE
SEL
2021
E/O
2009
TO USER SIDE
①
②
WORKING PATH
PROTECTION PATH

# FIG. 24

4-FIBER 1:1 BI-DIRECTIONAL PROTECTION

START
SEND DATA SIGNAL TO WORKING PATH
EACH NODE MONITORS LABEL SIGNAL
DETECT FAULT IN LABEL SIGNALS IN WORKING PATH?
NO
YES
DIVERT FROM WORKING PATH TO PROTECTION PATH
RECOVERY
END

WORKING PATH
PROTECTION PATH
LABEL SWITCHING PATH
NODE

FIG. 25A

NODE 1
NODE 2
NODE 3
NODE 4
NODE 5
NODE 6

4-FIBER 1:1 BI-DIRECTIONAL TYPE
NORMAL OPERATION CASE

FIG. 25B
① DETECT FAULT
② DIVERT SIGNALS
FROM WORKING PATH
TO PROTECTION PATH
NODE 1
NODE 2
NODE 3
NODE 4
NODE 5
NODE 6

4-FIBER 1:1 BI-DIRECTIONAL TYPE
FIBER CUT CASE

FIG. 25C

① DETECT FAULT
② DIVERT SIGNALS FROM WORKING PATH TO PROTECTION PATH
NODE 1
NODE 2
NODE 3
NODE 4
NODE 5
NODE 6

4-FIBER 1:1 BI-DIRECTIONAL TYPE RING CUT CASE

# FIG. 26

TO USER SIDE
2009
2009
2005
2008
2004
2003
2007
2001
PROTECTION PATH
2006-1
DROP
WORKING PATH
2001
2006
2015
2014
2011
2002
2010
2012
ADD
2003
2004
2013
DROP
2007
FROM USER SIDE
2005
2004
TO USER SIDE
2009
2008
2010
2012
2013
2003
ADD
DROP
2007
WORKING PATH
2002
2001
PROTECTION PATH
2006
2001
2014
2003
2006-1
2007
2004
2008
2005
2009
2009
TO USER SIDE

FIG. 27

4-FIBER 1+1 BI-DIRECTIONAL PROTECTION

START
SEND DATA IN SAME DIRECTION THROUGH WORKING PATH AND PROTECTION PATH
RECEIVE DATA THROUGH WORKING PATH
EACH NODE MONITORS LABEL SIGNAL
DETECT FAULT IN LABEL SIGNALS IN WORKING PATH?
NO
YES
DETECT FAULT IN LABEL SIGNAL IN PROTECTION PATH?
FIBER CUT
NO
RING CUT
YES
NOTIFY OTHER NODES OF FAULT
EACH NODE CHANGES LABEL SWITCHING PATH
RECOVERY
END
SWITCH RECEIVING TERMINAL TO PROTECTION PATH
RECOVERY
END

WORKING PATH
NODE
PROTECTION PATH
WORKING-PATH-LABEL SWITCHING PATH
PROTECTION-PATH-LABEL SWITCHING PATH

FIG. 28A

NODE 1
NODE 2
NODE 3
NODE 4
NODE 5
NODE 6

4-FIBER 1+1 BI-DIRECTIONAL TYPE
(SAME DIRECTION IN WORKING PATH AND PROTECTION PATH)
NORMAL OPERATION CASE

FIG. 28B

NODE 1
RECEIVE THROUGH
PROTECTION PATH
NODE 2
NODE 3
NODE 4
NODE 5
NODE 6

4-FIBER 1+1 BI-DIRECTIONAL TYPE
(SAME DIRECTION IN WORKING PATH AND PROTECTION PATH)
FIBER CUT CASE

FIG. 28C

① NOTIFY RING CUT
② SEND THROUGH NO-FAULT LOCATION
NODE 1
NODE 2
NODE 3
NODE 4
NODE 5
NODE 6

4-FIBER 1+1 BI-DIRECTIONAL TYPE
(SAME DIRECTION IN WORKING PATH AND PROTECTION PATH)
RING CUT CASE

WORKING PATH
PROTECTION PATH
WORKING-PATH-LABEL SWITCHING PATH
PROTECTION-PATH-LABEL SWITCHING PATH
NODE

FIG. 29A

NODE 1
NODE 2
NODE 3
NODE 4
NODE 5
NODE 6

4-FIBER 1+1 BI-DIRECTIONAL TYPE
(SAME DIRECTION IN WORKING PATH AND PROTECTION PATH)
NORMAL OPERATION CASE

FIG. 29B

NODE 1
RECEIVE THROUGH PROTECTION PATH
NODE 2
NODE 3
NODE 4
NODE 5
NODE 6

4-FIBER 1+1 BI-DIRECTIONAL TYPE
(SAME DIRECTION IN WORKING PATH AND PROTECTION PATH)
FIBER CUT CASE

FIG. 29C
NODE 1
RECEIVE THROUGH
PROTECTION PATH
NODE 2
NODE 6
NODE 3
NODE 5
NODE 4

4-FIBER 1+1 BI-DIRECTIONAL TYPE
(SAME DIRECTION IN WORKING PATH AND PROTECTION PATH)
RING CUT CASE

FIG. 30

TO USER SIDE
FROM USER SIDE
WORKING PATH
PROTECTION PATH
ADD
DROP
2001
2002
2003
2004
2005
2006
2007
2008
2009
2010
2011
2012
2013
2021
2022

# FIG. 31

PACKET SWITCHED 4-FIBER 1+1 BI-DIRECTIONAL TYPE
START
SEND DATA THROUGH WORKING PATH AND PROTECTION PATH
RECEIVE THROUGH WORKING PATH
COMPARE AND RECORD RECEIVED PACKETS DROPPED FROM RING THROUGH WORKING PATH AND PROTECTION PATH
EACH NODE MONITORS LABEL SIGNALS
DETECT FAULT IN LABEL SIGNALS IN WORKING PATH?
NO
YES
DETECT FAULT IN LABEL SIGNAL IN PROTECTION PATH?
FIBER CUT
NO
RING CUT
YES
NOTIFY OTHER NODES OF FAULT
EACH NODE CHANGES LABEL SWITCHING PATH
RECOVERY
END
SWITCH RECEIVING TERMINAL TO WORKING PATH OR PROTECTION PATH FOR EACH PACKET
RECOVERY
END

FROM USER SIDE
TO USER SIDE
WORKING PATH
PROTECTION PATH
ADD
DROP
2001
2002
2003
2004
2005
2006
2007
2008
2009
2010
2011
2012
2013
2021
2022
2023

FIG. 32

# FIG. 33

START
MASTER NODE SENDS PILOT PACKET TO A NODE IN TWO DIRECTIONS
PILOT PACKET RECEIVED BY THE NODE NORMAL?
NO
YES
SWITCH RECEIVE TO PROTECTION PATH
NOTIFY MASTER NODE OF FAULT IN RECEIVED PACKET
MASTER NODE IDENTIFIES NODE WITH FAULTY SWITCH AND ORDERS SWITCHING
RECOVERY
END

FIG. 34 PRIOR ART

4005;OPTICAL FIBER DELAY LINE
4006
OPTICAL COUPLER
4004
EXTERNAL MODULATOR #1
EXTERNAL MODULATOR #2
EXTERNAL MODULATOR #3
EXTERNAL MODULATOR #N
4004
4012
SHIFT REGISTER
OPTICAL DIVIDER
4003
4001
CLOCK GENERATOR
LASER OSCILLATOR
4002
4011;INPUT ELECTRICAL SIGNAL
:OPTICAL SIGNAL
:ELECTRICAL SIGNAL

FIG. 35 PRIOR ART

4001 CLOCK GENERATOR
4002 LASER OSCILLATOR
DATA
4021 MODULATOR
4022
4023
4024
#1
#2
#K
4025; OPTICAL GATING SWITCH
: OPTICAL SIGNAL
: ELECTRICAL SIGNAL

4001
CLOCK GENERATOR
LASER OSCILLATOR
4002
DATA
MODULATOR
4021
4042 ;OBPF
4046
;DELAY LINE
4043;2X2
OPTICAL
SWITCH
4045
4044;OPTICAL
GATING
SWITCH

FIG. 36 PRIOR ART

FIG. 37 PRIOR ART

4061
4062
4063
#1
4061
4062
4063
#2
4061
4062
4063
#K

FIG. 38 PRIOR ART

4043;2X2
OPTICAL
SWITCH
4044;OPTICAL
GATING
SWITCH
4046
;DELAY LINE
4042 ;OBPF
4045

FIG. 39

3004
3004
3008
3005
3001
#1
(h)
#2
(i)
(l)
#3
(j)
3004
3008
(k)
3002
#N
3003
3004
3017
#N
3017
#3
#2
#1
3017
READ CLOCK SIGNAL
3012
#1
3010
3011
(g)
(f)
(e)
(d)
INPUT ELECTRICAL SIGNAL #1
(a)
3012
#2
3010
3011
INPUT ELECTRICAL SIGNAL #2
(b)
3019
3012
#N
3010
3011
INPUT ELECTRICAL SIGNAL #N
(c)
:OPTICAL SIGNAL
:ELECTRICAL SIGNAL

FIG. 40
ELECTRICAL PACKET
(a) PULSE TRAIN OF INPUT ELECTRICAL SIGNAL #1
(b) PULSE TRAIN OF INPUT ELECTRICAL SIGNAL #2
(c) PULSE TRAIN OF INPUT ELECTRICAL SIGNAL #N
(d) OUTPUT PULSE TRAIN FROM SERIAL/PARALLEL CONVERSION CIRCUIT #1
(e) OUTPUT PULSE TRAIN FROM SERIAL/PARALLEL CONVERSION CIRCUIT #1
(f) OUTPUT PULSE TRAIN FROM SERIAL/PARALLEL CONVERSION CIRCUIT #1
(g) OUTPUT PULSE TRAIN FROM SERIAL/PARALLEL CONVERSION CIRCUIT #1
(h) INPUT PULSE TRAIN INTO OPTICAL MODULATOR #1
(i) INPUT PULSE TRAIN INTO OPTICAL MODULATOR #2
(j) INPUT PULSE TRAIN INTO OPTICAL MODULATOR #3
(k) INPUT PULSE TRAIN INTO OPTICAL MODULATOR #N
(l) OUTPUT PULSE TRAIN FROM OPTICAL COUPLER
OPTICAL PACKET
ΔT
Δt
t

FIG. 41

(a)
3101
3103
(b)
(c)
(d)
(e)
3104
#1
#2
#3
#N
3105
SW#1
SW#2
SW#3
SW#N
3106
MEMORY #1-1
MEMORY #1-2
MEMORY #1-3
MEMORY #1-N
MEMORY #2-1
MEMORY #2-2
MEMORY #2-3
MEMORY #2-N
MEMORY #3-1
MEMORY #3-2
MEMORY #3-3
MEMORY #3-N
MEMORY #N-1
MEMORY #N-2
MEMORY #N-3
MEMORY #N-N
(f)
(g)
(h)
(i)
(j)
(k)
(l)
(m)
(n)
3107
3108
#1
#2
#3
#N
(o)
(p)
(q)
:OPTICAL SIGNAL
:ELECTRICAL SIGNAL

FIG. 42

3111
3112
OTDM/WDM
CONVERSION
CIRCUIT
AWG

FIG. 43
OPTICAL PACKET
OPTICAL PACKET
OPTICAL PACKET
(a) ULTRA-HIGHSPEED PULSE INPUT TRAIN
(b) ELECTRICAL OUTPUT PULSES FROM PHOTO DETECTOR #1
(c) ELECTRICAL OUTPUT PULSES FROM PHOTO DETECTOR #2
(d) ELECTRICAL OUTPUT PULSES FROM PHOTO DETECTOR #3
(e) ELECTRICAL OUTPUT PULSES FROM PHOTO DETECTOR #4
(f) ELECTRICAL INPUT PULSES INTO MEMORY #1-1
(g) ELECTRICAL INPUT PULSES INTO MEMORY #1-2
(h) ELECTRICAL INPUT PULSES INTO MEMORY #1-3
(i) ELECTRICAL INPUT PULSES INTO MEMORY #2-1
(j) ELECTRICAL INPUT PULSES INTO MEMORY #2-2
(k) ELECTRICAL INPUT PULSES INTO MEMORY #2-3
Δt
t

FIG. 44

(l) ELECTRICAL INPUT PULSES INTO MEMORY #3-1
(m) ELECTRICAL INPUT PULSES INTO MEMORY #3-2
(n) ELECTRICAL INPUT PULSES INTO MEMORY #3-3
(o) ELECTRICAL OUTPUT PULSES FROM OR CIRCUIT
(p) ELECTRICAL OUTPUT PULSES FROM OR CIRCUIT
(q) ELECTRICAL OUTPUT PULSES FROM OR CIRCUIT
3 N+3 L
3' (N+3)' L'
3" (N+3)" L"
1 2 3
ΔT
1' 2' 3'
L'
1" 2" 3"
L"
ELECTRICAL PACKET
ELECTRICAL PACKET
ELECTRICAL PACKET
t

FIG. 45

ULTRA-HIGHSPEED
OPTICAL PACKET INPUT
OTDM/WDM
CONVERSION
CIRCUIT #1
3121
(b)
DISPERSIVE
MEDIUM #1
3122
(c)
OTDM/WDM
CONVERSION
CIRCUIT #2
3121
DISPERSIVE
MEDIUM #2
3122
(d)
OTDM/WDM
CONVERSION
CIRCUIT #m
3121
DISPERSIVE
MEDIUM #m
3122
(e)
:OPTICAL SIGNAL

FIG. 46

3131;OPTICAL CIRCUIT
OPTICAL
INPUT
SIGNAL
3132;CHIRPED FIBER GRATING

FIG. 47

(a) ULTRA-HIGHSPEED OPTICAL PULSE INPUT TRAIN
(b) OPTICAL PULSE TRAIN AFTER OTDM/WDM CONVERSION
(c) OPTICAL OUTPUT PULSES FROM DISPERSIVE MEDIUM #1
(d) OPTICAL OUTPUT PULSES FROM DISPERSIVE MEDIUM #2
(e) OPTICAL OUTPUT PULSES FROM DISPERSIVE MEDIUM #3
Δt
ΔT
λ1
λ1+Δλ
λ1+2Δλ
λ1+3Δλ
λ1+4Δλ
λ2
λ2+Δλ
λ2+2Δλ
λ3
λ3+Δλ
λ3+2Δλ
λ3+3Δλ
λ3+4Δλ
λ3+5Δλ
λ3+6Δλ
λ3+7Δλ